# EUROPEAN PATENT SPECIFICATION

(11) **EP 3 084 634 B1**
(45) Date of publication and mention of the grant of the patent: **31.07.2019**
(21) Application number: 14819230.5
(22) Date of filing: 10.12.2014
(51) Int. Cl.: G06F 17/24, G06F 3/0488

(54) **INTERACTION WITH SPREADSHEET APPLICATION FUNCTION TOKENS**
INTERAKTION MIT FUNKTIONSTOKEN EINER TABELLENKALKULATIONSANWENDUNG
INTERACTION AVEC JETONS DE FUNCTION D'UN TABLEUR

(30) Priority: 17.12.2013 US 201314108923
(43) Date of publication of application: 26.10.2016
(73) Proprietor: Microsoft Technology Licensing, LLC, Redmond, WA 98052-6399 (US)
(72) Inventor: OTERO, Carlos Augusto, Redmond, Washington 98052-6399 (US); CAMPBELL, John, Redmond, Washington 98052-6399 (US); ALBERT, Uhl, Redmond, Washington 98052-6399 (US); WU, Fei, Redmond, Washington 98052-6399 (US); FICHTNER, Matthew, Redmond, Washington 98052-6399 (US)
(74) Representative: Grünecker Patent- und Rechtsanwälte PartG mbB
(86) International application number: PCT/US2014/069421
(87) International publication number: WO 2015/094828

(56) References cited:
- CA-A1- 2 850 982
- US-A1- 2010 083 089
- US-A1- 2013 321 282
- "Chapter 15: Using Formulas and Functions" In: Sherry Kinkoph Gunter, et.al.: "Microsoft Office 2008 for Mac Bible", April 2009 (2009-04), Wiley, Indianapolis, Indiana, US, XP002738131, ISBN: 978-0-470-38315-5 pages 413-441, page 413, 2nd para.; page 414, 1st para.; p. 418-419, Sections "Writing formulas" and "Using the Formula Bar"; page 421, Fig. 15.5; page 422, Fig.15.6; page 426, lines 1-23; page 431, Fig.15.11; page 435, Fig. 15.16
- Anonymous: "Create or change a cell reference", , 1 January 2015 (2015-01-01), pages 1-4, XP055225377, Retrieved from the Internet: URL:https://support.office.com/en-us/artic le/Create-or-change-a-cell-reference-078c7 e49-0eb2-491e-9635-1bebe4bc9379 [retrieved on 2015-11-03]
- Albert Napier: "Microsoft? Excel? 2013: Working with Formulas and Functions Using a Touch Screen", , 5 October 2013 (2013-10-05), pages 1-55, XP055225208, ISBN: 978-1-940079-03-5 Retrieved from the Internet: URL:http://038e910.netsolhost.com/wordpres s/wp-content/uploads/2015/01/wwff_T_2013-L esson-1-Sample-Using-Touch-Sample-and-Touc h-Screen-Appendix.pdf [retrieved on 2015-11-02]

## Description

### BACKGROUND

With the advent of computers and computer software, users have become accustomed to receiving, entering, editing, filtering and otherwise utilizing data of various types. Spreadsheet applications have become very popular for allowing users to handle large amounts of data and for performing many different computations and data organization functions. Spreadsheet application users may enter and manipulate large amounts of data with the help of a variety of mathematical and data organizing formulas and functions. Unfortunately, interacting with application formulas and functions can be a difficult task for many users owing to the typically unique sentence structure (or, syntax) used by their spreadsheet applications. In addition, with the advent of touch-enabled computing devices, interacting with such formulas and functions using a touch interface often is particularly difficult. And, while many touch-enabled devices provide pop-up soft keyboards, such soft keyboards often consume half or more of the available display space of a given device making entry and use of such formulas and functions frustrating to the user.

It is with respect to these and other considerations that the present invention has been made.

"Chapter 15: Using Formulas and Functions" in: Sherry Kinkoph Gunter, et. al.: "Microsoft Office 2008 for Mac Bible", April 2009, Wiley, Indianapolis, Indiana, US, ISBN: 978-0-470-38315-5, pages 413 to 441 describes how formulas work and are built. Excel's built in functions and the services they provide are described.

US 2013/321282 A1 relates to row and column navigation.

Albert Napier: "Microsoft Excel 2013: Working with Formulas and Functions Using a Touch Screen", 5 October 2013, pages 1 to 55, ISBN: 978-1-940079-03-5 guides the reader through creating, copying/pasting, filling, reviewing, and correcting basic and complex formulas in Excel 2013 using step-by-step hands-on activities.

### SUMMARY

The invention is what is claimed in the independent claims.

Preferred embodiments are specified in the dependent claims.

This summary is provided to introduce a selection of concepts in a simplified form that are further described below in the detailed description. This summary is not intended to identify key features or essential features of the claimed subject matter, nor is it intended as an aid in determining the scope of the claimed subject matter.

Embodiments of the present invention solve the above and other problems by enabling interaction with spreadsheet application function tokens. According to examples of the present invention, spreadsheet application functions and formulas may be tokenized into individual components including mathematical arguments, arithmetic operators, as well as, a variety of previously generated functions (each of such components, arguments, operators and functions collectively referred to herein as "tokens"). According to examples of the present invention, each of such spreadsheet tokens may be interacted with by a user. Tokens may be in the form of single function tokens, collections of tokens, and multiple tokens may be combined to form single tokens. According to examples of the present invention, interaction with a token allows for filtering among various mathematical operators and functions.

According to other examples of the present invention, data in a spreadsheet application grid and/or canvas may be moved into a formula/function bar or other edit field for generating or modifying function tokens. Function tokens may be interacted with in a variety of ways. Tokens may be moved together to create, nest or perform operations. Tokens may be moved from a formula/function bar into a spreadsheet grid or canvas to perform an operation. Tokens may be moved off a formula/function bar or edit field to remove the token from a formula or function. Tokens may be interacted with for clearing an associated value in a cell or formula/function bar. Tokens may be interacted with for toggling between absolute and relative references. Tokens may be zoomed into to show precedents of the token. Tokens may be moved for changing a value of a token. Tokens may be interacted with via a variety of inputs, and tokens may be converted from token to editable text and back to token.

The details of one or more embodiments are set forth in the accompanying drawings and description below. Other features and advantages will be apparent from a reading of the following detailed description and a review of the associated drawings. It is to be understood that the following detailed description is explanatory only and is not restrictive of the invention as claimed.

### BRIEF DESCRIPTION OF THE DRAWINGS

The accompanying drawings, which are incorporated in and constitute a part of this disclosure, illustrate various embodiments of the present invention.
Fig. 1 illustrates a system architecture in which embodiments of the present invention may be practiced.
Fig. 2A illustrates a computer-implemented spreadsheet document showing a variety of function tokens in a formula/function bar and showing a number of data items.
Fig. 2B illustrates the computer-implemented spreadsheet document of Fig. 2A and illustrates a user interface component for naming a function token.
Fig. 3A illustrates a computer-implemented spreadsheet document showing a variety of function tokens in a formula/function bar and showing a number of data items.
Fig. 3B illustrates the computer-implemented spreadsheet document of Fig. 3A and illustrates user interaction with a token in a formula/function bar.
Fig. 3C illustrates the computer-implemented spreadsheet document of Fig. 3B and illustrates user interaction with a token in a formula/function bar.
Fig. 3D illustrates the computer-implemented spreadsheet document of Fig. 3A showing a variety of function tokens in a formula/function bar and showing a number of data items.
Fig. 4A illustrates a computer-implemented spreadsheet document showing a variety of function tokens in a formula/function bar and illustrates user interaction with a token in a formula/function bar.
Fig. 4B illustrates a computer-implemented spreadsheet document showing a variety of function tokens in a formula/function bar and illustrates a dropdown menu associated with a selected token for modifying an applied token.
Fig. 4C illustrates the computer-implemented spreadsheet document of Fig. 4B and illustrates user interaction with a dropdown menu of selectable function tokens.
Fig. 4D illustrates a computer-implemented spreadsheet document showing a variety of function tokens in a formula/function bar and showing a number of data items.
Fig. 5A illustrates a computer-implemented spreadsheet document including a variety of data items.
Fig. 5B illustrates the computer-implemented spreadsheet document of Fig. 5A and illustrates touch interaction with a data item.
Fig. 5C illustrates the computer-implemented spreadsheet document of Fig. 5B and illustrates touch interaction with a data item.
Fig. 5D illustrates the computer-implemented spreadsheet document of Fig. 5C including a variety of data items and illustrates touch interaction with a function token.
Fig. 5E illustrates the computer-implemented spreadsheet document Fig. 5D and illustrates a dropdown menu associated with a selected token for modifying an applied token.
Fig. 6A illustrates a computer-implemented spreadsheet document including a variety of data items and illustrates touch interaction with a group of data items.
Fig. 6B illustrates a computer-implemented spreadsheet document including a variety of data items and illustrates touch interaction with a group of data items.
Fig. 6C illustrates the computer-implemented spreadsheet document of Fig. 6B and illustrates a collection of function tokens in a formula/function bar.
Fig. 7 illustrates a computer-implemented spreadsheet document and illustrates movement of a function token from a formula/function bar into a spreadsheet grid or canvas.
Fig. 8 illustrates a computer-implemented spreadsheet document showing a variety of function tokens in a formula/function bar and illustrates user interaction with a token in a formula/function bar.
Fig. 9 illustrates a computer-implemented spreadsheet document and illustrates user interaction with a token in a formula/function bar.
Fig. 10A illustrates a computer-implemented spreadsheet document showing a variety of function tokens in a formula/function bar and illustrates user interaction with a token in a formula/function bar.
Fig. 10B illustrates the computer-implemented spreadsheet document of Fig. 10A and illustrates a modified cell reference in a formula/function bar.
Fig. 11 illustrates a computer-implemented spreadsheet document showing a variety of function tokens in a formula/function bar and illustrates user interaction with a token in a formula/function bar.
Fig. 12 is a flowchart illustrating a method for interacting with spreadsheet application function tokens.
Fig. 13 is a block diagram illustrating example physical components of a computing device with which embodiments of the invention may be practiced.
Figs. 14A and 14B are simplified block diagrams of a mobile computing device with which embodiments of the present invention may be practiced.
Fig. 15 is a simplified block diagram of a distributed computing system in which embodiments of the present invention may be practiced.

### DETAILED DESCRIPTION

As briefly described above, embodiments of the present invention are directed to interaction with spreadsheet application function tokens. The following detailed description refers to the accompanying drawings. Wherever possible, the same reference numbers are used in the drawings and the following description to refer to the same or similar elements. While embodiments of the invention may be described, modifications, adaptations, and other implementations are possible. For example, substitutions, additions, or modifications may be made to the elements illustrated in the drawings, and the methods described may be modified by substituting, reordering, or adding stages to the disclosed methods. Accordingly, the following detailed description does not limit the invention but, instead, the proper scope of the invention is defined by the appended claims.

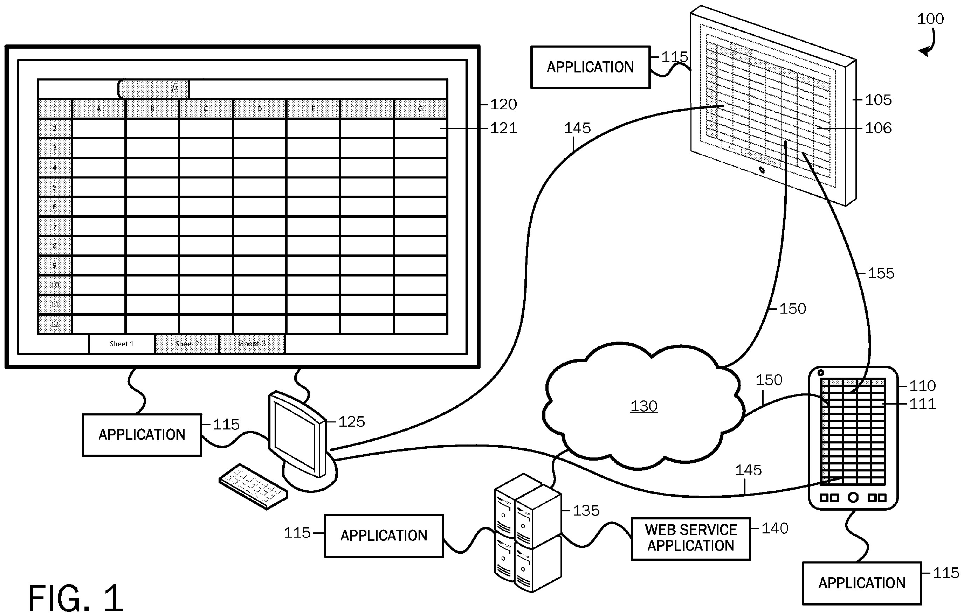

Fig. 1 illustrates a system architecture in which embodiments of the present invention may be practiced. In Fig. 1, a variety of computing devices are illustrated with which embodiments of the present invention may be practiced on individual computing devices or in a collaborative work session. For example, a small-form smartphone or other handheld computing device 110 is illustrated having a display surface 111 and being associated with an application 115. A larger form tablet-style computing device 105 having a display surface 106 and an associated spreadsheet application 115 is illustrated. A large display device 120 having a display surface 121 is illustrated being associated with a computer 125 and a spreadsheet application 115.

As should be appreciated, the computing devices 105, 110, 120, 125 are purposes of illustration only and are not exhaustive of the various types of computing devices that may be used in accordance with embodiments of the present invention. For example, while the display device 120 is illustrated as a display unit with an associated computing device 125, the large-form display device 120 may operate as an integrated display/computing device that may be used for any suitable use from large-scale display uses, for example, in a conference room, to personal computing, as desired. According to embodiments, each of the computing devices illustrated in Fig. 1 may receive input through a variety of suitable means including touch or gesture input, keyboard input, mouse input, voice command input, electronic inking input, eye tracking, and the like.

Referring still to Fig. 1, the software applications 115 illustrated in association with each of the computing devices 105, 110, 120, 125 are illustrative of any application having sufficient computer executable instructions for enabling embodiments of the present invention as described herein. For example, applications 115 may include spreadsheet applications, word processing applications, slide presentation applications, electronic mail applications, notes taking applications, desktop publishing applications, and the like. An example spreadsheet application 115 includes EXCEL manufactured by Microsoft Corporation of Redmond, Washington. As should be appreciated, this example spreadsheet application is but one example of the many applications suitable for enabling embodiments described herein may be used.

Each of the computing devices 105, 110, 120, 125 may operate in a collaborative work environment through one or more wired or wireless data connections 145, 150, 155. That is, each of the computing devices may communicate with each other through wired or wireless data lines via direct connection, or via connection through a distributed computing network 130 such as the Internet or an intranet.

According to examples of the present invention, application functionality associated with each of the computing devices 105, 110, 120, 125 may operate according to one or more variations. For example, each application 115 may be a fully functional thick client application having all application functionality including the ability to send and receive data to and from other applications 115 operating on other computing devices in the collaborative work session. Each such application not only has its native functionality, for example, spreadsheet functionality, but according to examples of the present invention, each such application also contains sufficient computer executable instructions for allowing each application to operate as a control application for controlling information sent from a control device for receipt by an endpoint display device in a collaborative work environment. Likewise, each such application has sufficient computer executable instructions for allowing the application to operate as an endpoint display device for receiving control functions from another computing device.

According to another example of the present invention, the computing devices 105, 110, 120, 125 may communicate via a distributed computing network 130, for example, the Internet. Referring still to Fig. 1, the computing device 135 is illustrative of an Internet-based or "cloud-based" server computer on which may be operated one or more web services applications 140 for providing a collaborative work session, as described herein. According to this example of the present invention, each of the devices 105, 110, 120, 125 may operate as thin client systems, and collaborative communication between the devices may be operated at the direction of the web services application 140 operated at a remote site. According to this example of the present invention, an application 115 may operate at the remote server 135 wherein each of the devices 105, 110, 120, 125 may access and receive the functionality described herein via a remote service from the server based application 115, for example, via the web services application 140.

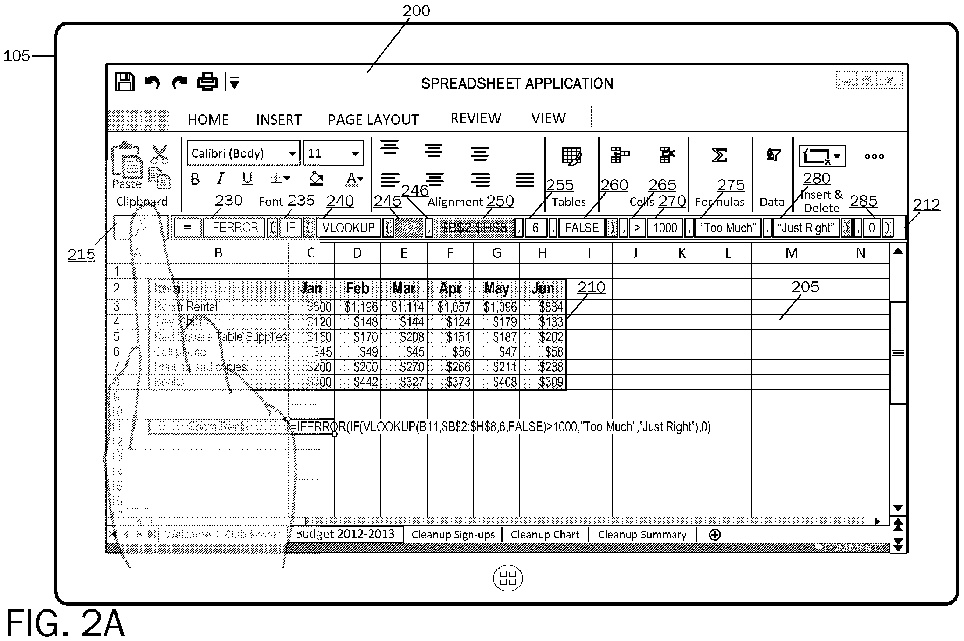

In Fig. 2A, an example spreadsheet application user interface 200 and spreadsheet document 205 are illustrated that may be displayed on any suitable computing device 105, 110, 120, 125 described above. According to examples of the present invention described herein, user interaction with the electronic spreadsheet user interface 200 and spreadsheet document 205 may be accomplished via a variety of interaction methods including keyboard entry, mouse entry, gesture entry, voice command, eye tracking, thin air gesture entry, electronic inking entry, and/or combinations thereof. The electronic spreadsheet user interface 200 and spreadsheet document 205 are for purposes of example and illustration only and are not exhaustive of the variety of types of documents that may contain data for which embodiments of the present invention may be utilized. For example, while embodiments described herein discuss creation and utilization of spreadsheet-type formulas/functions in terms of their operation in association with data contained in a spreadsheet application document, other software applications and associated documents, for example, word processing documents, slide presentation documents, electronic mail documents, notes documents, and the like that are capable of receiving displaying and allowing operation of spreadsheet-type functions may be utilized in accordance with examples of the present invention.

Referring still to Fig. 2A, a formula/function bar 212 is illustrated in which user-entered and developed or system-entered mathematical formulas or functions may be provided for operating on one or more data items contained in the associated spreadsheet grid or canvas 205, for example, one or more data items 210. As understood by those skilled in the art, mathematical formulas developed and entered into the formula/function bar 212 may be comprised of a variety of mathematical operators, mathematical functions, data cell indicators, data range indicators, and the like. A simple formula that may be developed and entered into the formula or function bar 212 may be the simple addition of two data items contained in two cells of the spreadsheet 205. On the other hand, as understood by those skilled in the art, a formula may include a complex collection of functions, arithmetic operators, cell designators, grammatical notations, and the like as is the case for the formula illustrated in the formula/function bar 212 illustrated in Fig. 2A.

The example formula that has been entered in the formula/function bar 212, illustrated in Fig. 2A, includes a variety of spreadsheet functions, for example, the "IFERROR" function 230, the "IF" function 235, the "VLOOKUP" function 240, etc. In addition, a variety of mathematical operators such as equal signs, parentheses, greater than sign (265), etc. are included in the formula. In addition, a variety of cell designators 245, 250 are included in the formula. In addition, text items 275, 280 are illustrated in the formula for displaying the illustrated text strings in association with the results of application of the formula to one or more data items. As should be appreciated, each of the components and/or mathematical arguments comprising the example formula have been brought together to comprise a single mathematical formula or function that is to be applied to one or more data items or one or more ranges of data items contained in the example spreadsheet 205. As described herein, each of the components and/or arguments comprised of mathematical functions, operators, grammatical indications, cell indications, individual data items, text entries, and the like may be identified and referred to as function tokens, and each of the function tokens comprising a given spreadsheet formula or function may be interacted with independently of other formula/function components or tokens by a user for creating, editing, modifying, and utilizing a spreadsheet function in association with one or more data items.

As understood by those skilled in the art, complex spreadsheet functions comprised of numerous functions, function arguments, mathematical operators, grammatical operators, data items, cell designators, text strings, and the like, as illustrated in Fig. 2A, may be generated by a user in association with large amounts of data spread across numerous sheets comprising a spreadsheet workbook, or related data utilized across numerous spreadsheet workbooks. When formulas/functions of varying complexity are developed, as illustrated in Fig. 2A, a user may desire to utilize a developed formula/function in various spreadsheet documents and on various data sets. For example, such a complex formula may be associated with calculating an accounting of quarterly sales records developed by hundreds or thousands of sales persons operating on behalf of a large corporation. Rather than having to recreate such a complex formula for each use, or rather than having to copy and paste such a complex formula from one spreadsheet to another, according to examples of the present invention, such a formula may be compressed or collapsed automatically or manually by the user into a single token (single formula/function comprised of various components), and the single token may be named and saved for subsequent use as desired.

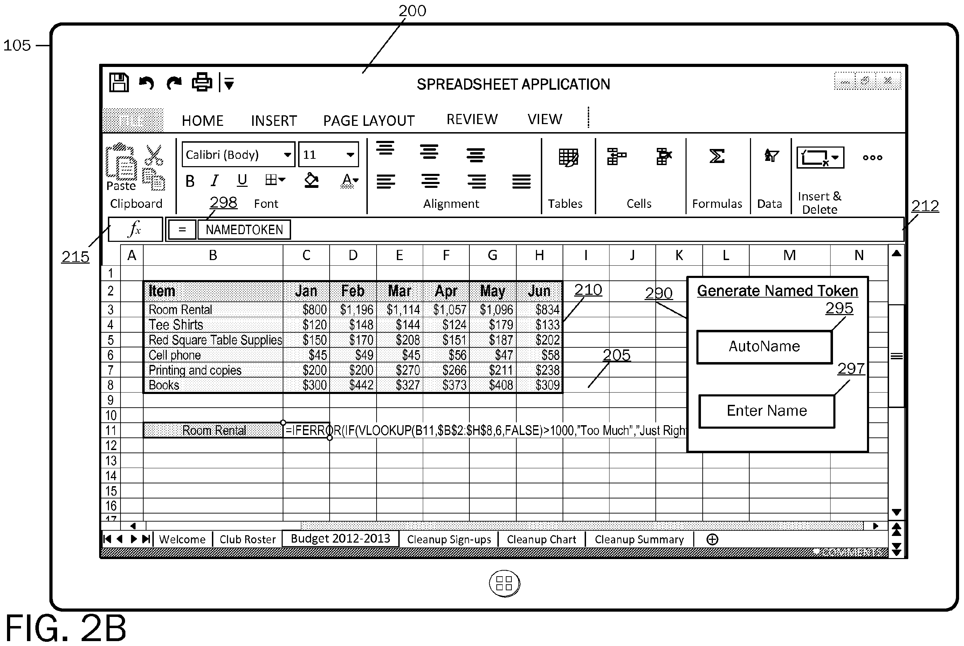

After the complex formula/function has been saved as a single token with an automatically provided or user provided name, for example, "sales token" or "sales function," then the named single token may be entered into the formula/function bar 212 for operating on one or more data items, and each of the functions, mathematical operators, components, arguments, text strings, grammatical indicators, data indicators, cell indicators, etc. comprising the named single token or function will be brought to bare on the desired one or more data items. As illustrated in Fig. 2B, if a user desires to collapse or compress a complex formula into a single named token or function, a create token/function user interface dialog or component 290 may be launched. An auto name function 295 may be selected for causing the application 115 to generate a name for the complex formula/function, or a user may enter a user-specified name in the name field 297 for the formula/function. As should be appreciated, the user interface component 290 may be launched by selecting an appropriate button or control in the spreadsheet application user interface 200, for example, the function button 215 to allow the user to automatically or manually name the desired formula.

As illustrated in Fig. 2B, after the formula/function has been automatically or manually named, the new name 298 (e.g., NAMEDTOKEN) is displayed in the formula/function bar 212 in association with the one or more data items to which it is to be applied. As should be appreciated, when the formula/function is designated and named as a single token or function, the underlying formula/function may be stored by the spreadsheet application 115 for subsequent recall and use, as desired. As should be appreciated, once a formula/function comprised of various components has been designated as a named single function or token, the designated single function or token may be added to other function components and tokens to create yet more complex formulas/functions that in turn may be designated as single functions or tokens, and so on. As should be appreciated, naming a formula or function, as described herein, is not restricted to complex formulas/functions, but may be accomplished for very similar formulas/functions as desired by a given user.

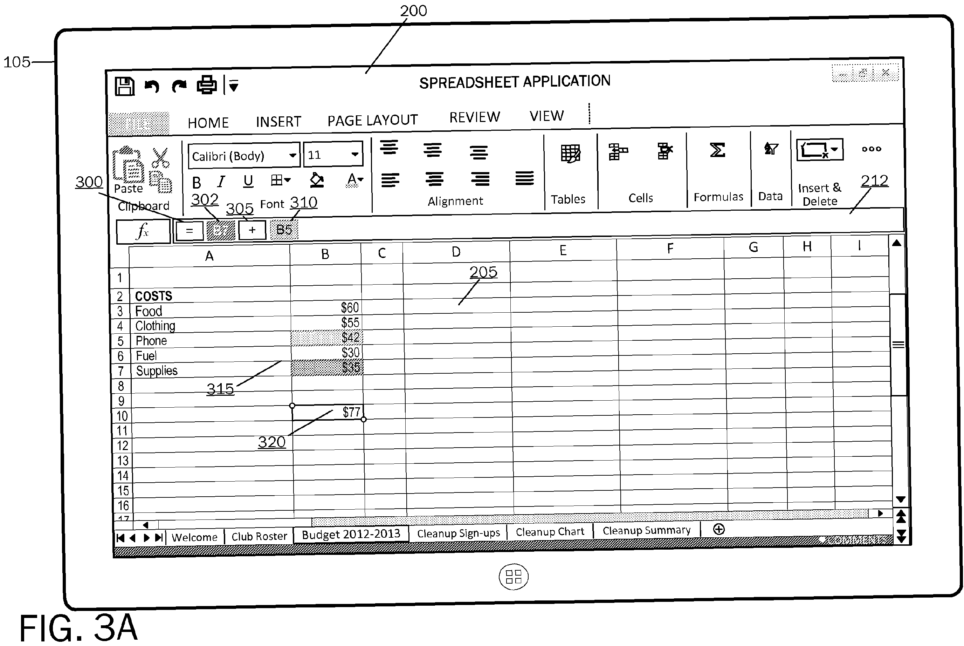

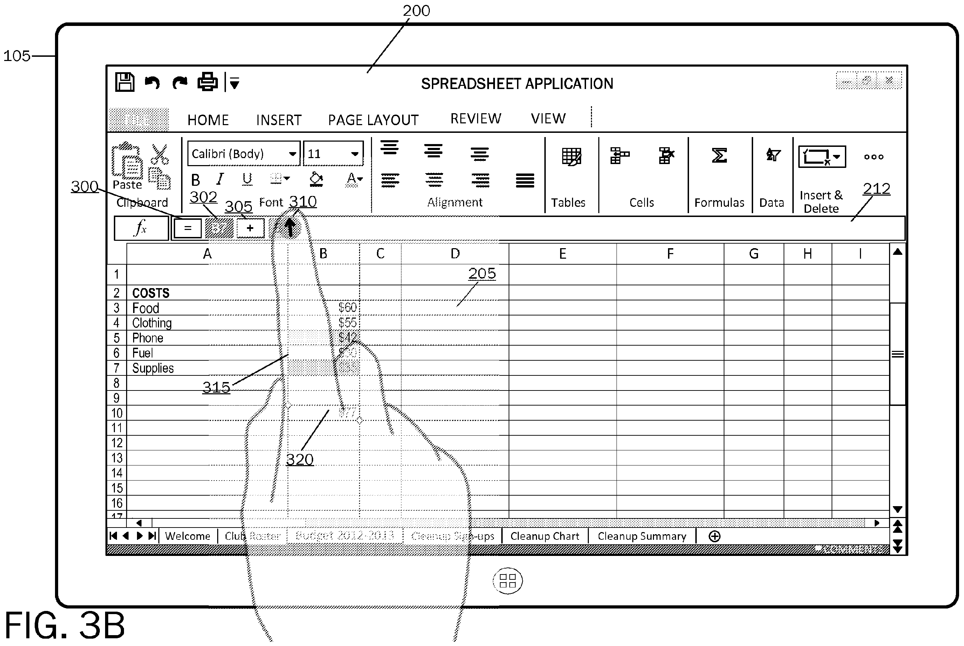

Referring now to Fig. 3A, a number of data items 302 are illustrated in the example spreadsheet 205 of the spreadsheet application user interface 200. A basic mathematical formula is illustrated the formula/function bar 212 for adding the data value of cell B5 to the data value of cell B7. The result of the addition formula is displayed in cell B10. As illustrated in Fig. 3B, according to examples of the present invention, individual tokens comprising the illustrated formula/function, for example, individual mathematical operators, individual cell designators, individual functions may be interacted with by a user via any suitable means for interacting with the user interface 200, including, touch, gesture, mouse click, voice command, thin air gesturing, electronic inking interaction, and the like.

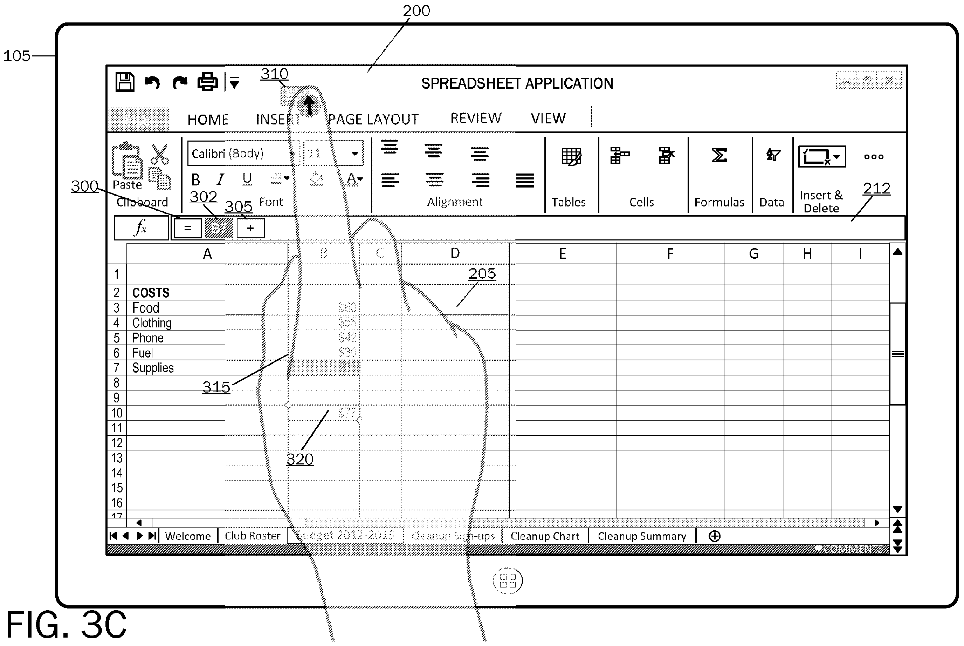

As illustrated in Fig. 3B, a user touches the cell designator 310 contained in the formula 300 for purposes of interacting with that portion of the formula 300. For example, the user may have decided that she does not wish to add the data contained in cell B7 to the data contained in cell B5, and thus, the user may wish to remove the cell designator for cell B5 from the formula. As illustrated in Fig. 3C, the user, after touching and holding on the cell designator 310 for cell B5, drags or otherwise moves the cell designator off the user interface 200 and away from the formula/function bar 212.

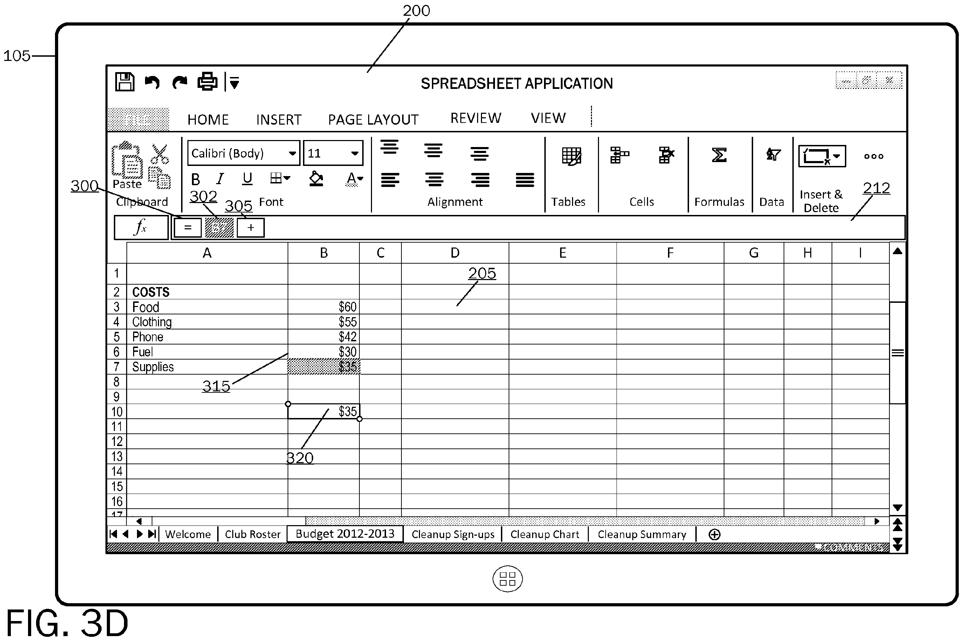

Referring then to Fig. 3D, after the cell designator 310 for cell B5 has been removed from the formula 300 (by removing it from the formula/function bar 212), the formula 300 is thus modified such that no data is now added to the data contained in cell B7 until the formula is further modified. The data 320 now displayed in cell B10 has been automatically modified to show only the data in cell B7 until such a time as an additional data item is added to the formula 300, as desired. Thus, according to this example of the present invention, a user may interact with individual tokens comprising a spreadsheet formula by moving individual tokens out of the formula/function bar for automatically changing the components of the formula or function remaining in the formula/function bar and for automatically changing the resulting computed value of the formula or function remaining in the formula/function bar against one or more data items contained in the spreadsheet.

Just as a formula/function token may be moved out of the formula/function bar 212, as illustrated in Figs. 3A - 3D, so may a token be moved into the formula bar for adding to the formula or function contained therein or for modifying the formula or function contained therein. For example, after the user removes the cell designator for cell B5 from the formula or function bar, as illustrated and described above, the user may subsequently drag data from cell B4 into the formula/function bar 212 for adding the cell designator for cell B4 to the formula bar. The formula/function will be automatically updated to add the data contained in cell B7 to the data contained in cell B4, and the result will be automatically displayed in cell B10. As can be appreciated from the foregoing, according to examples of the present invention, tokens, including any components of a formula or function, may be readily moved around a spreadsheet grid or canvas into or out of a formula/function bar, into or out of a given cell, into or out of an edit field or menu of tokens or token components, and the like, for utilizing the tokens as desired and for creating and/or modifying one or more spreadsheet formulas or functions. The example formula, data items, and illustrations provided with respect to Figs. 3A - 3D are for purposes of example and illustration only and are not limiting of the vast numbers of formulas, functions and components that may be used in the formula/function bar 212 that may be modified by user interaction, as described herein.

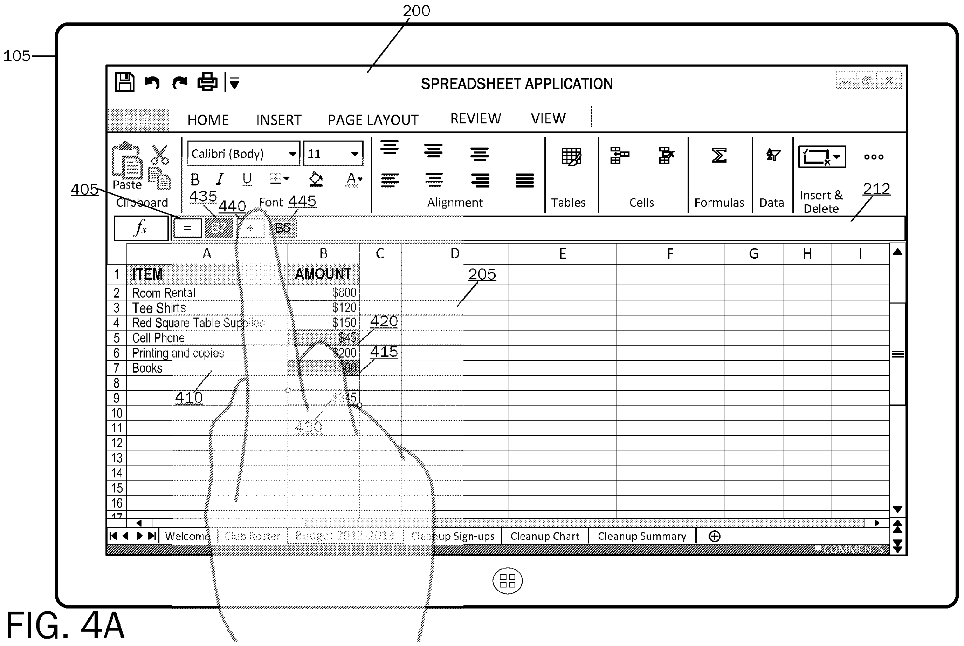

Referring now to Fig. 4A, a variety of data items 410 are illustrated in the example spreadsheet 205, and a formula 405 is illustrated in the formula/function bar 212 comprised of a cell designator 435, a mathematical addition operator 440 and a cell designator 445 for adding a data value 415 contained in cell B7 to a data value 420 contained in cell B5 of the spreadsheet 205 and for displaying the result 430 in cell B9. As illustrated in Fig. 4A, a user desiring to interact with the mathematical operator 440 for modifying the applied mathematical operator, selects the mathematical operator 440 displayed as part of the formula 405 in the formula/function bar 212. In this example, the user selects the desired mathematical operator by touching the mathematical operator, but as should be understood, any available means for allowing the user to interact with the user interface 200 at the insertion point associated with the mathematical operator 440, as described herein, may be utilized.

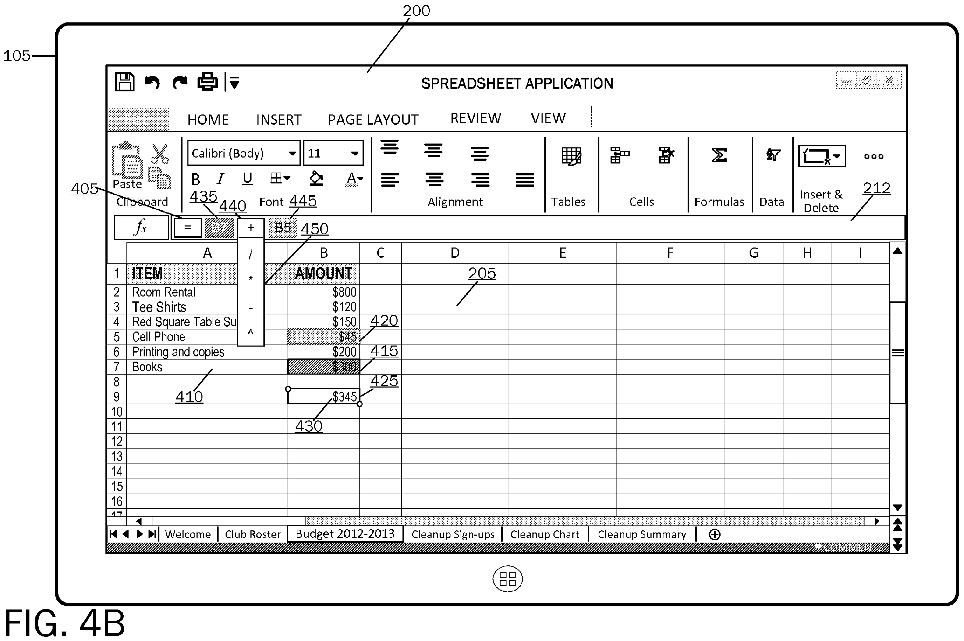

Referring to Fig. 4B, after selection of the mathematical operator 440, a dropdown menu 450 is displayed showing a variety of other mathematical operators that may be selected by the user for modifying the formula 405. As should be appreciated, the dropdown menu 450 is for purposes of illustration only, and the variety of other mathematical operators may be displayed in a different user interface component, for example, a popup component, an array of selectable controls in the user interface 200, and the like. Alternatively, in association with other interaction means, for example, voice interaction, a voice command of "replace the plus operator in the formula bar with a minus operator" may be utilized for interacting with the desired mathematical operator.

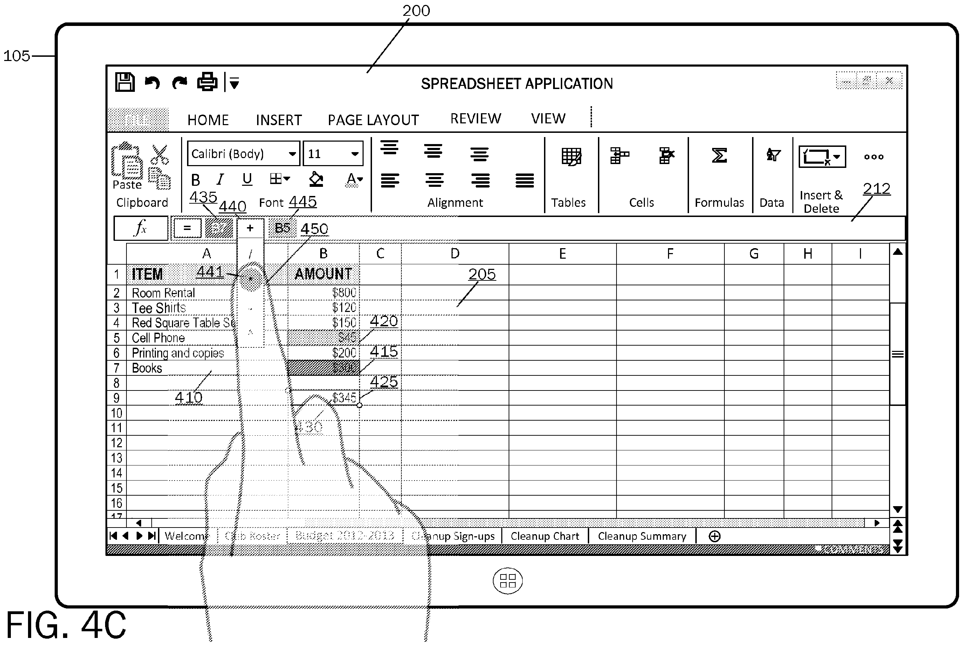

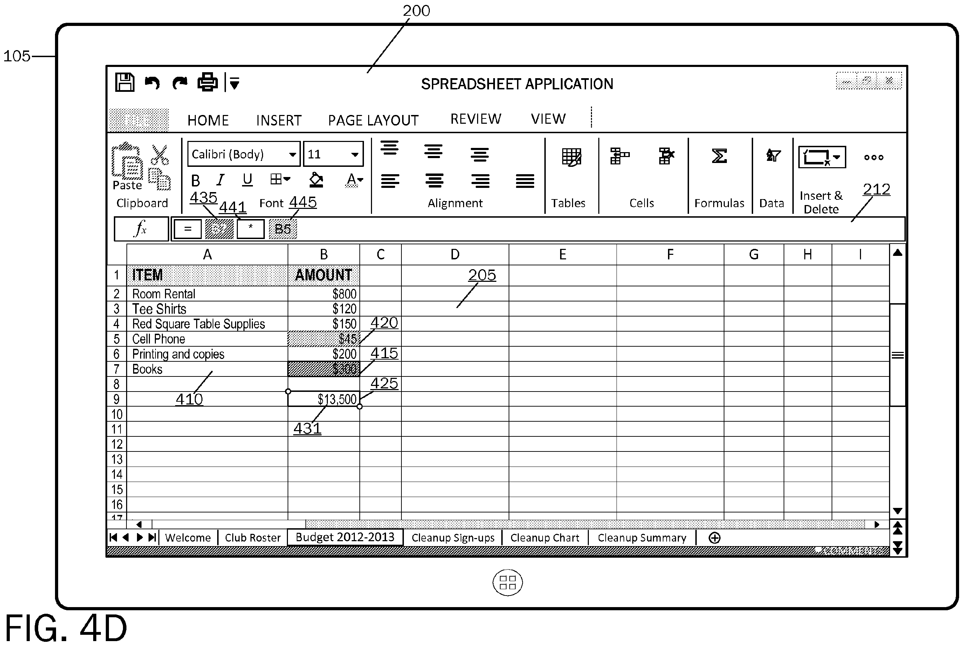

Referring now to Fig. 4C, the user selects the multiplication operator from the dropdown menu 450 for replacing the previously selected addition operator with the multiplication operator. As illustrated in Fig. 4D, the addition operator 440 is replaced with the multiplication operator 441, and the resulting data 430 is automatically updated and replaced with data 431 as the result of multiplying data contained in cell B7 by data contained in cell B5. As should be appreciated, interacting with the mathematical operators, as illustrated in Figs. 4A - 4D is for purposes of illustration and example only and is not limiting or exhaustive of interactions that may be accomplished with a variety of other components or arguments comprising a given spreadsheet formula. For example, referring back to Fig. 2A, according to examples of the present invention, each of the components comprising the complex formula illustrated in the formula/function bar 212 may be interacted with for allowing a user to select alternate components in a similar manner as illustrated and described in Figs. 4A - 4D. For example, the function 240 of "VLOOKUP" illustrated in Fig. 2A may be selected, and a dropdown menu or other user interface component may be provided for displaying a variety of other functions that may be selected for replacing the "VLOOKUP" function 240. Each of the other components comprising the example formula likewise may be interacted with for obtaining a listing of alternate components that may be used for modifying the formula.

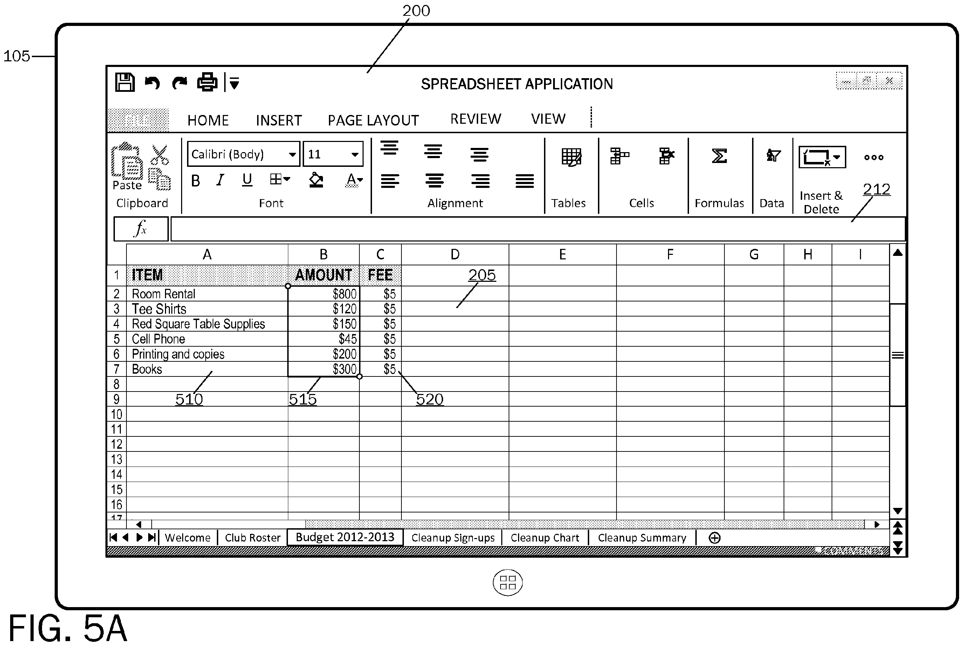

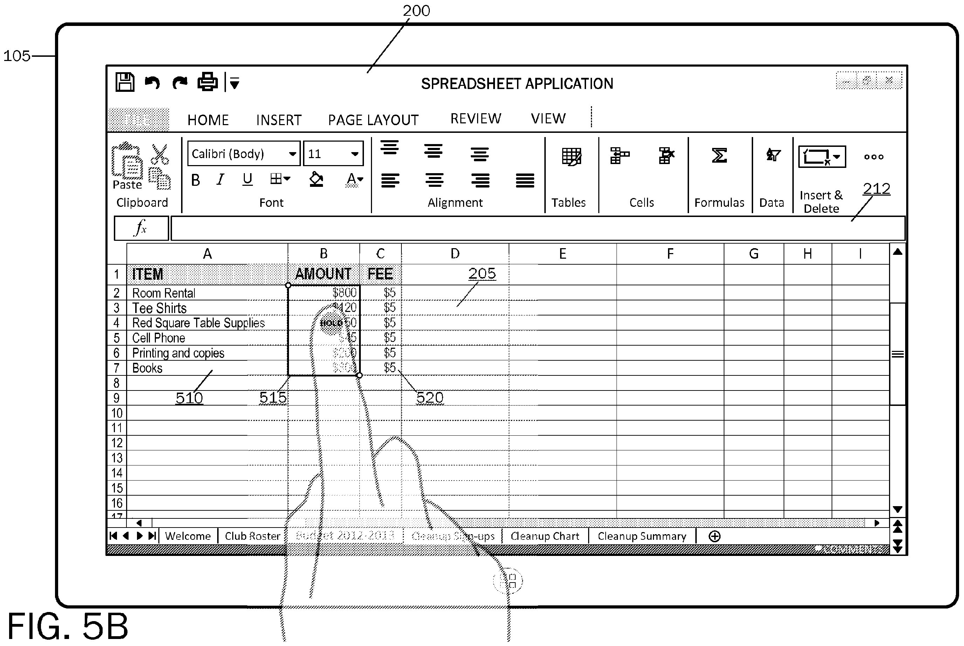

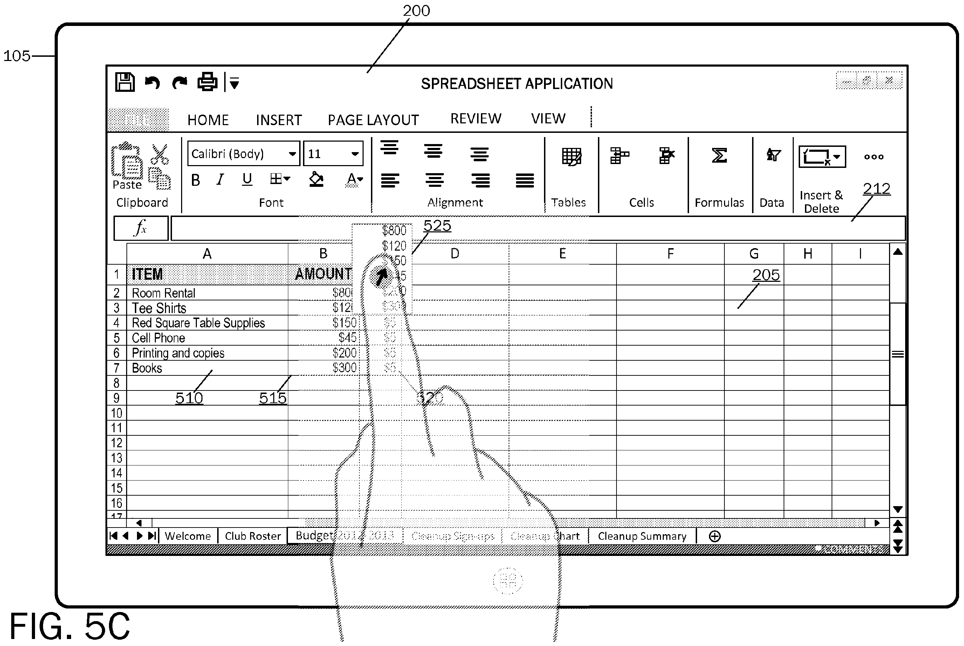

Referring now to Figs. 5A, 5B, 5C, two columns 515, 520 of data are displayed in the example spreadsheet document 205. According to examples of the present invention, in addition to automatically generating a function by dragging or otherwise moving the data from a single spreadsheet cell into the function bar 215, multiple cells may be interacted with simultaneously such that a user may drag or otherwise move cell references for a plurality of cells from the spreadsheet grid into the formula/function bar 215 for automatically generating a function application to the desired range. As illustrated in Fig. 5B, the user selects a range of data comprised of data items contained in the example cells B2 - B7. As illustrated in Fig. 5C, the user may move the selected range of cells toward the formula/function bar 212 for depositing the selected range 525 into the formula/function bar 212. According to one example of the present invention, as the user moves the selected range from the spreadsheet document 205 toward the formula/function bar 212, a graphical display of the being-moved data, for example, a ghosted display of the being-moved data may be presented for graphically illustrating a movement of the data from the spreadsheet into the formula/function bar.

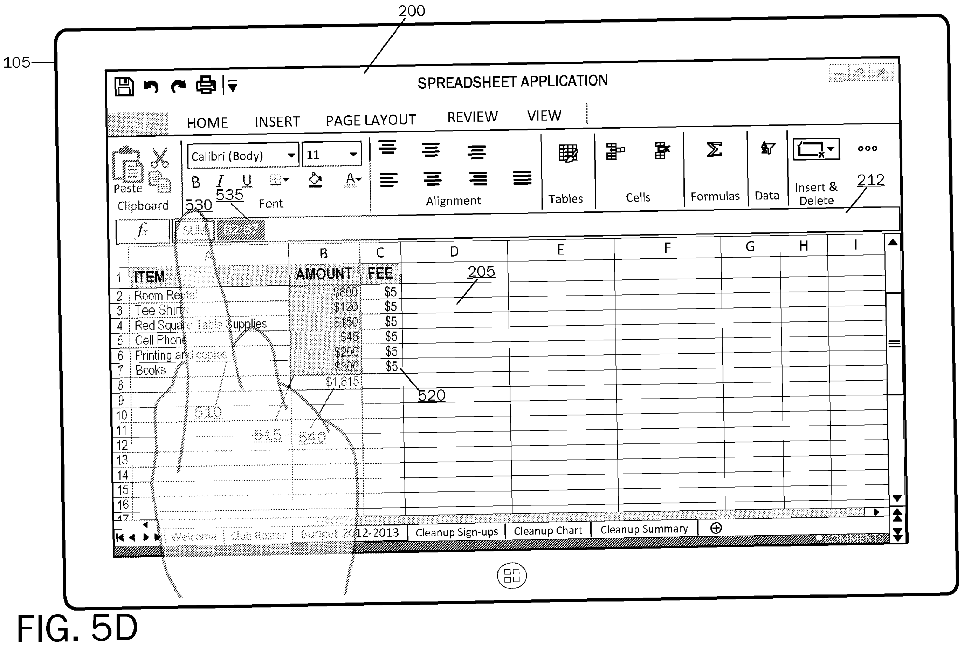

Referring now to Fig. 5D, after the dragged or otherwise moved data is released into the formula/function bar 212, cell references 535 corresponding to the data deposited into the formula/function bar are presented as part of an automatically generated mathematical function. After the cell references associated with the dragged or moved data items are determined and disposed in the formula/function bar 212, the application 115 may determine that the user intends to generate a mathematical function, and therefore, a mathematical operator 530 that may be used for a range of data may be automatically added to the cell references to generate the proper syntax of a mathematical function that may be used for operating on the data contained in the displayed cell references. For example, as illustrated in Fig. 5D, the mathematical operator of SUM is automatically placed in front of the displayed cell references, because one mathematical operation that may be applied to a range of data such as the range of data illustrated in column B of Fig. 5D is the operation of summing the data items contained in the range.

As should be appreciated, the mathematical operator 530 may be automatically determined for the range of data associated with the cell references and may be presented as illustrated in Fig. 5D, or alternatively, the mathematical operator 530 may be presented in a ghosted or otherwise temporary manner until the user accepts the offered mathematical operator by selecting on the operator according to any available selection means, for example, tapping, mouse clicking, voice activation, gesturing, and the like. In addition, as described above, the initially offered mathematical operator, for example, SUM, may be offered as a menu of mathematical operator choices, for example, SUM, MIN, MAX, AVERAGE (AVG), MEDIAN, MODE, and the like or any other mathematical operator that may be utilized for a plurality of data items.

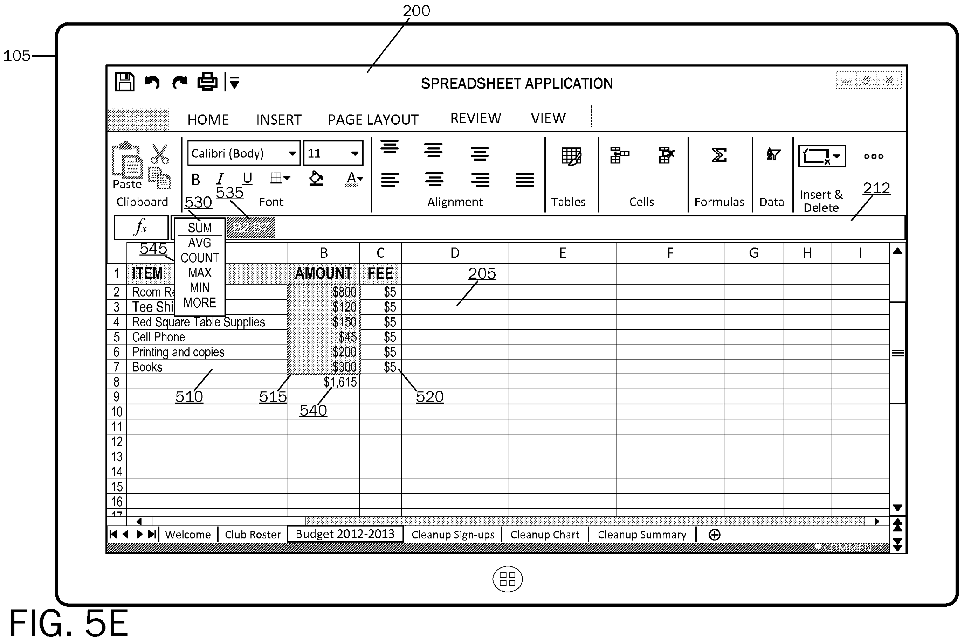

Referring still to Fig. 5D, in a similar manner as described above with reference to Figs. 4A - 4D, a user may interact with the function 530, and as illustrated in Fig. 5E, a dropdown menu 545 or other suitable user interface component may be provided in which may be displayed one or more other functions that may be selected for modifying the presently developed formula and for changing a result of application of the formula to the selected one or more data items. For example, as illustrated in Fig. 5E, the SUM function may be replaced with another function, for example, the AVG function, and the data 540 contained in cell B8 representing a summation of the data items contained in cells B2 - B7 with an average of those data items.

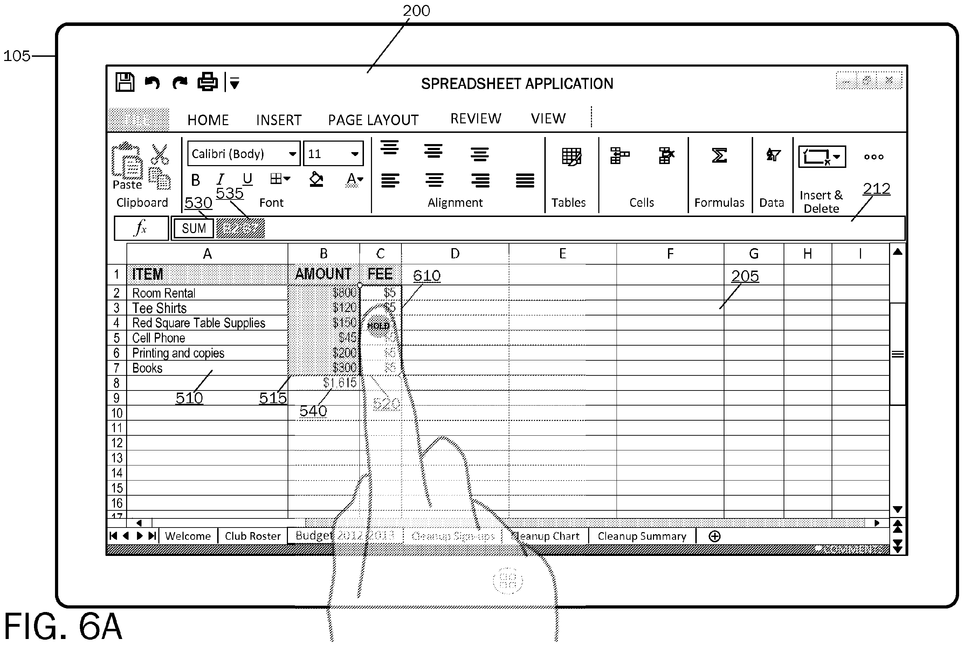

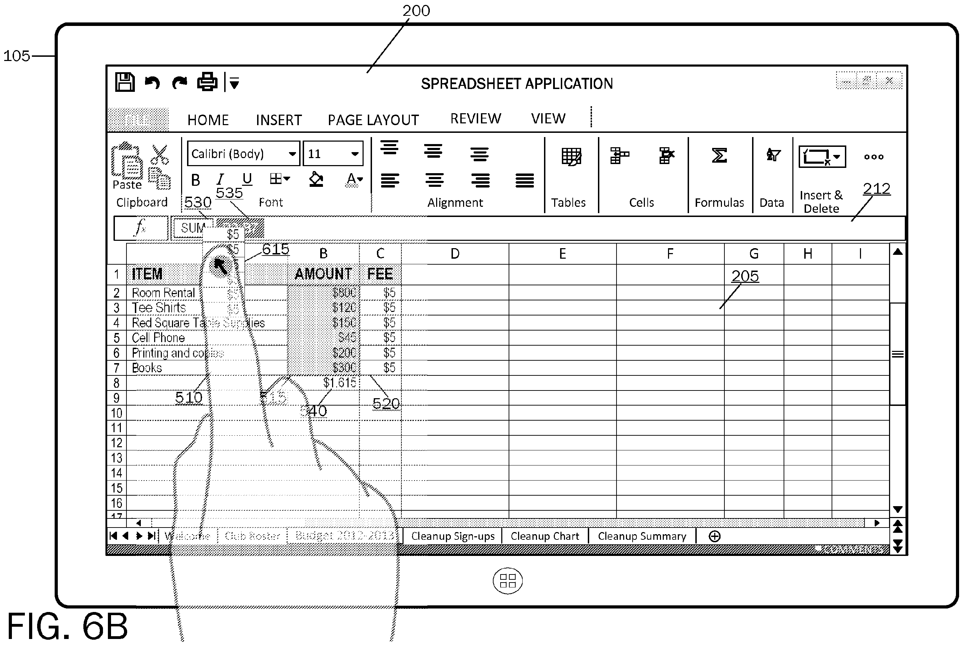

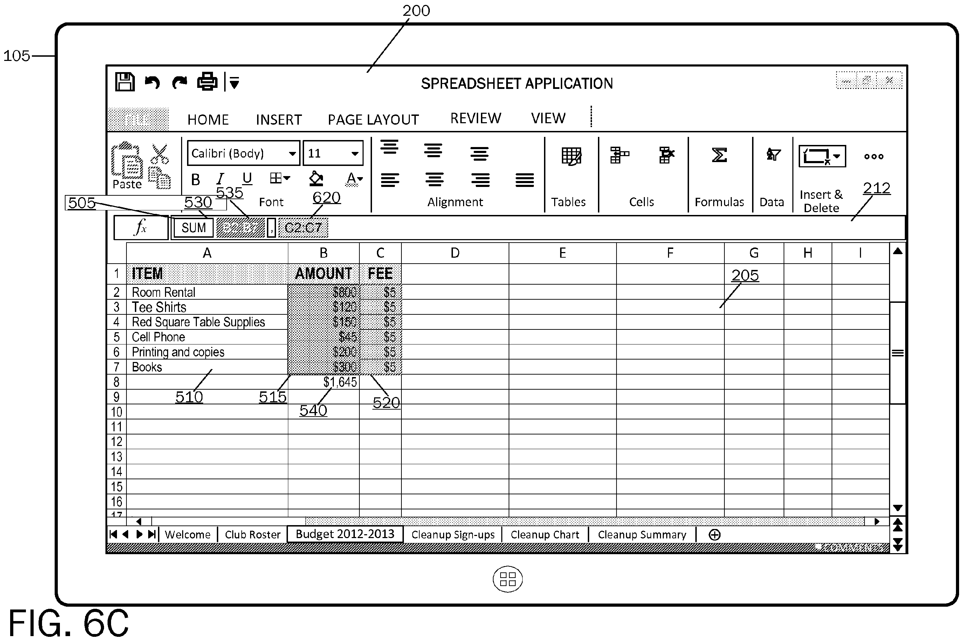

Referring now to Figs. 6A - 6C, movement of an additional one or more data items from the spreadsheet 205 into the formula/function bar 212 for further modifying the formula 505 is illustrated. In Fig. 6A, the user selects a data range comprising data contained in cells C2 - C7, in Fig. 6B the user begins moving the data range toward the formula/function bar 212, and in Fig. 6C after dropping the moved data range into the formula/function bar 212, a cell designator for cells C2 - C7 is added to the formula 505. The formula 505 is thus modified to now require that the example SUM function be operated on the additional data items.

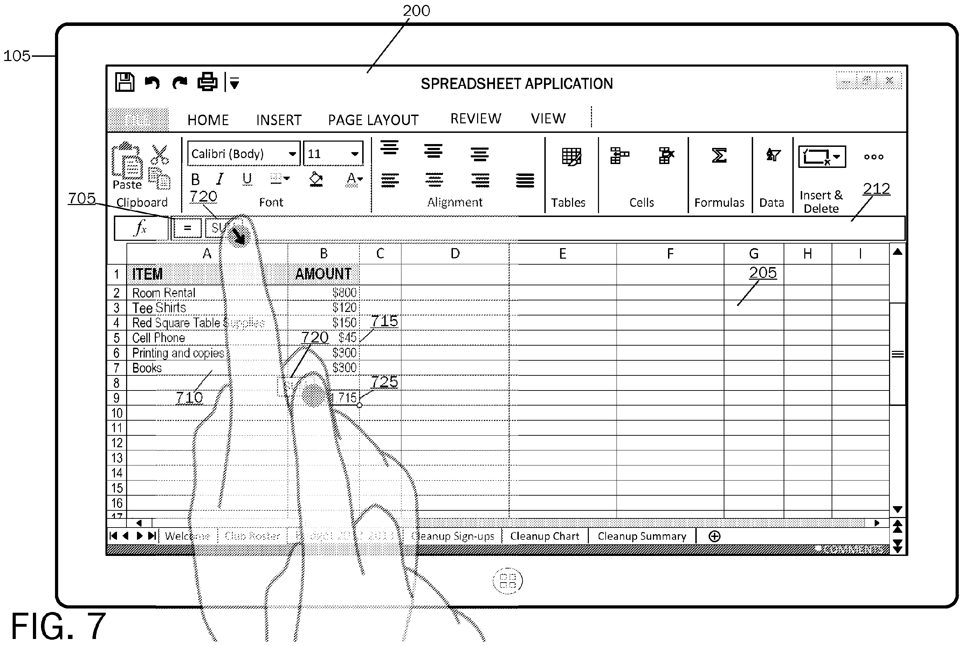

As described above, spreadsheet tokens may be interacted with according to a variety of input means, including touch, voice, eye tracking, mouse entry, hard and soft keyboard entry, thin air gesture, and the like. As illustrated in Figs. 7 through 10B below, user interactions with formula or function tokens may be used for accomplishing a variety of different actions. As illustrated in Fig. 7, a variety of data items 710, 715 are illustrated in a spreadsheet 205 of the spreadsheet application user interface 200. A formula 705 of "= SUM" is illustrated in the formula/function bar 212 for operating on one or more data items contained in the spreadsheet 205. According to an example of the present invention, one or more function tokens may be dragged or otherwise moved from the formula/function bar 212 into the spreadsheet grid or canvas for automatically performing a desired mathematical operation or other function on one or more data items contained in the grid or canvas. For example, as illustrated in Fig. 7, the user touches the SUM function 720 contained in the formula 705 and drags the SUM function to the spreadsheet grid and deposits the SUM function onto cell B9. The application 115 interprets the user's action as desiring to SUM the data contained in cells B2 through B7. The SUM of those data items is automatically computed and is displayed as data item 725 in cell B9. As should be appreciated, the example illustrated in Fig. 7 is for purposes of illustration only and is not limiting of the vast numbers of mathematical operators or functions that may be dragged or moved into the spreadsheet grid or canvas for operating on one or more data items, as illustrated in Fig. 7. For example, two or more function tokens may be moved onto the spreadsheet grid or canvas and may be combined into a single function token that may operate on a content item onto which the function tokens are deposited.

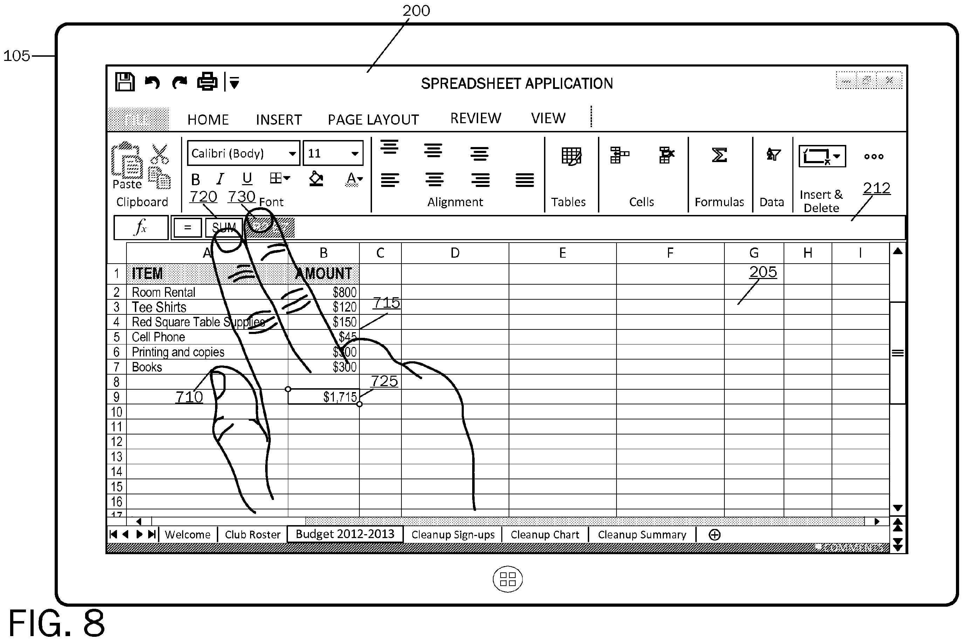

As illustrated in Fig. 8, according to another example of the present invention, a user may interact with a token in a formula for clearing the results of the token as applied to one or more data items in the spreadsheet grid or canvas. For example, by touching and shaking the SUM operator 720 contained in the formula 705, illustrated in Fig. 8, the application of the SUM function to the data 710 contained in cells B2 - B7 may be cleared such that the present content 725 contained in cell B9 will be cleared to allow the user to edit or modify the formula, as desired.

Referring still to Fig. 8, other gestures may be utilized in association with one or more formula/function tokens. For example, a token, may be flicked or tapped (or other interaction) for changing a reference from a relative reference to an absolute reference and vice versa. As understood by those skilled in the art, a relative reference may include a cell reference that changes when the cell reference is copied to a new location. On the other hand, an absolute reference stays the same if it is copied to a new location. For example, a relative reference formula of "SUM B2:B7" (as illustrated in Fig. 8) may change to "SUM C2:C7" if the formula is copied to the next cell over (i.e., in the C column). An absolute reference formula of "SUM $B$2:$B$7" will not change if copied to another location. According to examples of the present invention, a gesture such as a touch flick, tap, or the like may be designated by the application 115 for toggling a reference from relative to absolute.

In addition, other gestures may include pinching, tapping or other similar gestures for zooming into a token to see the token's precedents. For example, as described above with reference to Figs. 2A and 2B, if a formula is compressed or collapsed into a single named token for subsequent use, a tap, pinch and zoom, or other gesture may be performed on the single named token for expanding the named token out into a display of all of the components of the single named token, as illustrated in Fig. 2A, for allowing the user to quickly appreciate the precedent components of the single named formula or function token.

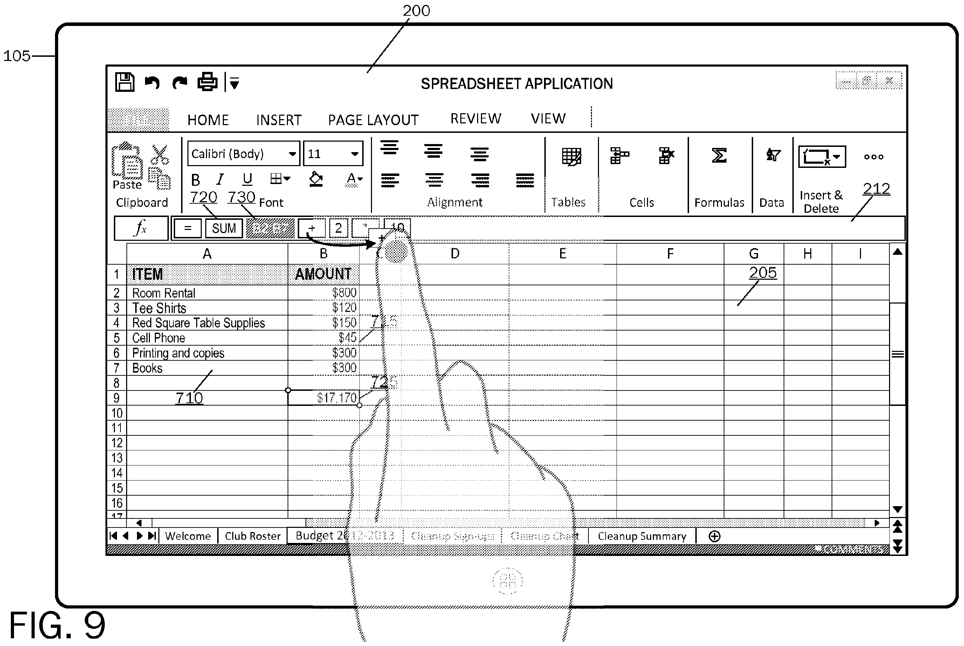

Referring now to Fig. 9, the sliding of a token to a different location for a different effect/result is illustrated. As a user slides a formula token from one location in the formula to another location in the formula, the value of the formula or the token may be automatically changed. For example, as illustrated in Fig. 9, a plus operator is slid from its present location to a different location which automatically changes the resulting value of the formula as applied to the data items 710. Thus, tokens comprising a formula or function may be moved within the formula or function bar by user interaction for modifying the formula or function, as desired.

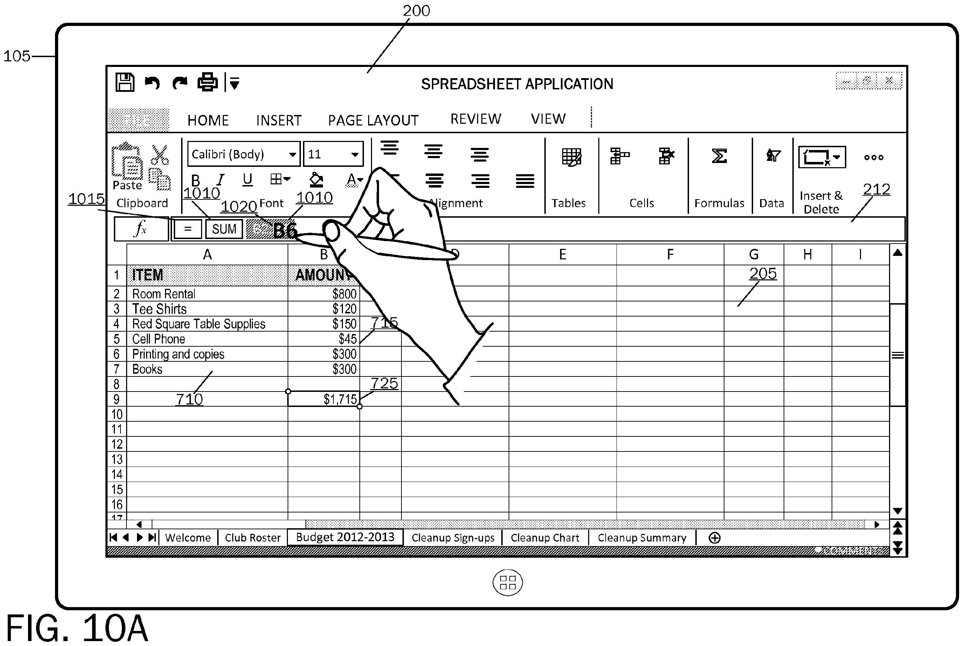

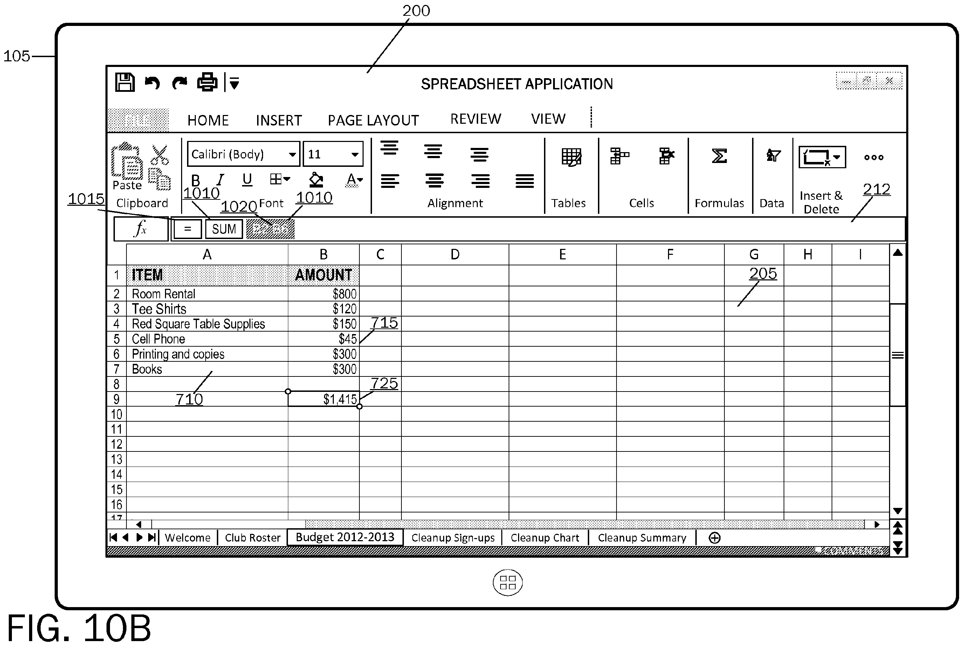

Referring now to Fig. 10A, an electronic pen and ink interaction is illustrated wherein a user handwrites over a token via an electronic inking function for modifying the token. For example, the user in Fig. 10A electronically handwrites a new cell designator 1020 over a present cell designator 1010 such that the SUM function 1015 is applied to a different one or more data items. As illustrated in Fig. 10B, after the electronic handwriting entry of "B6," as illustrated in Fig. 10A, the cells to which the SUM is applied will be the data contained in cells B2 - B6 as opposed to the previously entered cells B2 - B7.

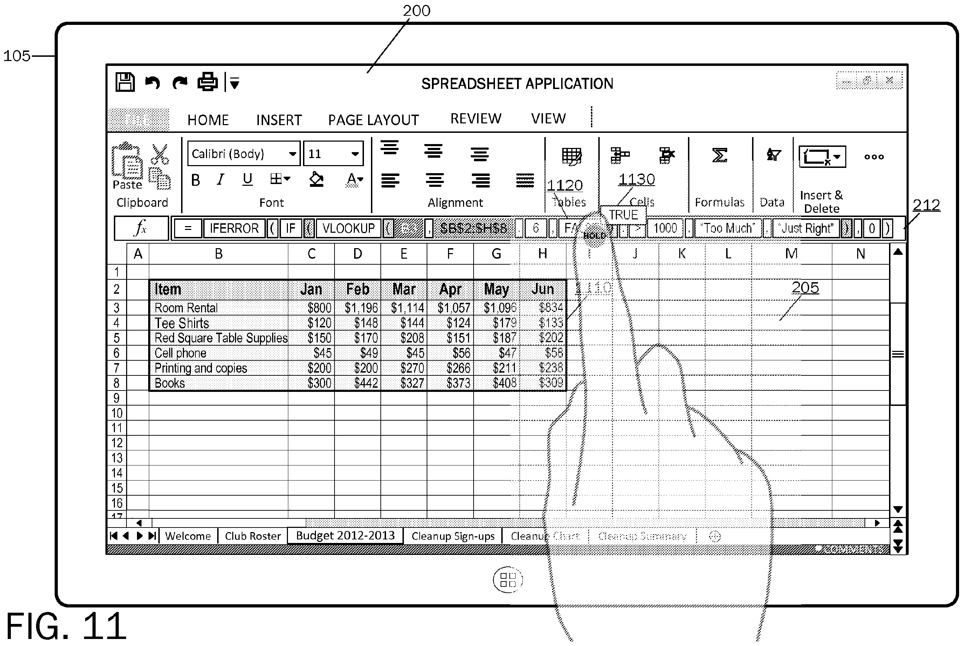

Referring now to Fig. 11, according to another example of the present invention, in addition to interacting with formula/function tokens, as described above, a token may be converted from token form to text form to allow a user to edit the token in text form before converting the token from text form back to the original token form. As illustrated in Fig. 11, the false operator 1120 is touched by the user causing a launching of a user interface edit field 1130 in which the user may either select an alternate operator, or in which the user may type or otherwise enter an alternate operator. Once the user has completed entry of the alternate operator, the token may be returned back to token form for application in the formula, as illustrated in Fig. 11. Thus, editing of any component of a formula or token may be performed according to a variety of different methods.

Having described an operating environment for various aspects of embodiments of the present invention with respect to Figs. 1 through 11, Fig. 12 is a flowchart illustrating a method for interacting with spreadsheet application formula or function tokens. The routine 1200 begins at operation 1205 and proceeds to operation 1210 where a spreadsheet formula is received in a formula/function bar 212, for example, as illustrated above with respect to Fig. 2A. At operation 1215, the received formula may be tokenized into individual tokens comprised of the individual components making up the received formula.

At operation 1220, if desired, a formula, as illustrated in Fig. 2A, may be compressed or collapsed into a single token that may be automatically or manually named and saved for subsequent use, as desired. At operation 1225, interaction with a single named token may be enabled to allow a user to view the components comprising the single named token and allowing the user to appreciate the mathematical and grammatical precedents associated with components of the single named token.

At operation 1230, interaction with individual tokens may be enabled to allow a user to change individual tokens, for example, to allow a user to change a mathematical operator to a different mathematical operator, or for allowing a user to change one function to a different function, and the like. At operation 1235, interaction with individual tokens may be enabled for allowing application of tokens to one or more data items.

At operation 1240, interaction with one or more tokens may be enabled for altering performance, application nature/properties of interacted-with tokens, as described above with respect to Figs. 8-11.

The routine 1200 ends at operation 1295.

While the invention has been described in the general context of program modules that execute in conjunction with an application program that runs on an operating system on a computer, those skilled in the art will recognize that the invention may also be implemented in combination with other program modules. Generally, program modules include routines, programs, components, data structures, and other types of structures that perform particular tasks or implement particular abstract data types.

The embodiments and functionalities described herein may operate via a multitude of computing systems including, without limitation, desktop computer systems, wired and wireless computing systems, mobile computing systems (e.g., mobile telephones, netbooks, tablet or slate type computers, notebook computers, and laptop computers), hand-held devices, multiprocessor systems, microprocessor-based or programmable consumer electronics, minicomputers, and mainframe computers.

In addition, the embodiments and functionalities described herein may operate over distributed systems (e.g., cloud-based computing systems), where application functionality, memory, data storage and retrieval and various processing functions may be operated remotely from each other over a distributed computing network, such as the Internet or an intranet. User interfaces and information of various types may be displayed via on-board computing device displays or via remote display units associated with one or more computing devices. For example user interfaces and information of various types may be displayed and interacted with on a wall surface onto which user interfaces and information of various types are projected. Interaction with the multitude of computing systems with which embodiments of the invention may be practiced include, keystroke entry, touch screen entry, voice or other audio entry, gesture entry where an associated computing device is equipped with detection (e.g., camera) functionality for capturing and interpreting user gestures for controlling the functionality of the computing device, and the like.

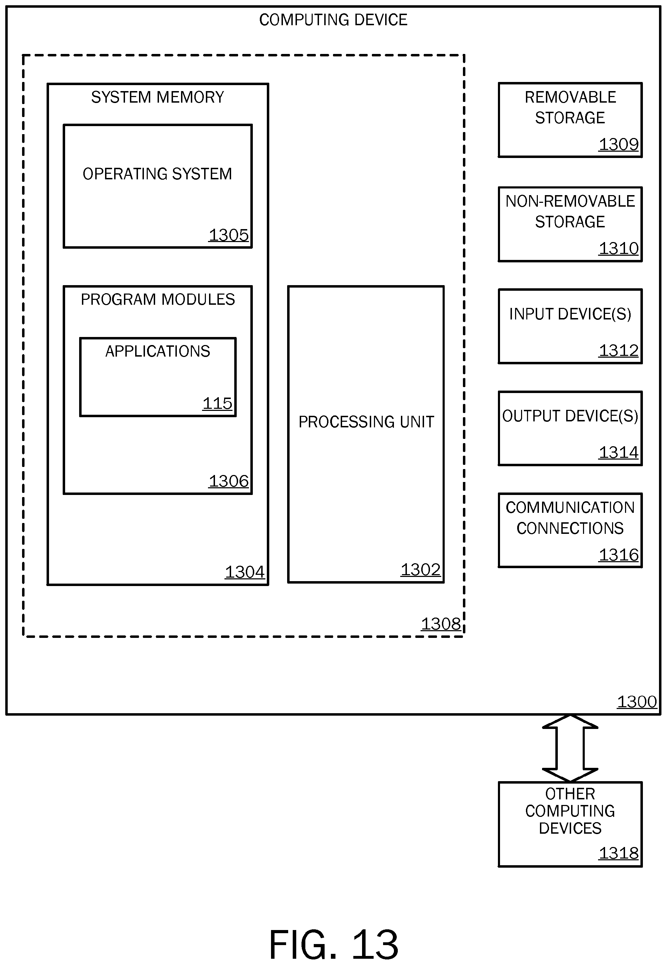

Figs. 13-15 and the associated descriptions provide a discussion of a variety of operating environments in which embodiments of the invention may be practiced. However, the devices and systems illustrated and discussed with respect to Figs. 13-15 are for purposes of example and illustration and are not limiting of a vast number of computing device configurations that may be utilized for practicing embodiments of the invention, described herein.

Fig. 13 is a block diagram illustrating physical components (i.e., hardware) of a computing device 1300 with which embodiments of the invention may be practiced. The computing device components described below may be suitable for the computing devices 105, 110, 120, 125, 135 described above. In a basic configuration, the computing device 1300 may include at least one processing unit 1302 and a system memory 1304. Depending on the configuration and type of computing device, the system memory 1304 may comprise, but is not limited to, volatile storage (e.g., random access memory), non-volatile storage (e.g., read-only memory), flash memory, or any combination of such memories. The system memory 1304 may include an operating system 1305 and one or more program modules 1306 suitable for running a variety of applications 1320. The operating system 1305, for example, may be suitable for controlling the operation of the computing device 1300. Furthermore, embodiments of the invention may be practiced in conjunction with a graphics library, other operating systems, or any other application program and is not limited to any particular application or system. This basic configuration is illustrated in Fig. 13 by those components within a dashed line 1308. The computing device 1300 may have additional features or functionality. For example, the computing device 1300 may also include additional data storage devices (removable and/or non-removable) such as, for example, magnetic disks, optical disks, or tape. Such additional storage is illustrated in Fig. 13 by a removable storage device 1309 and a non-removable storage device 1310.

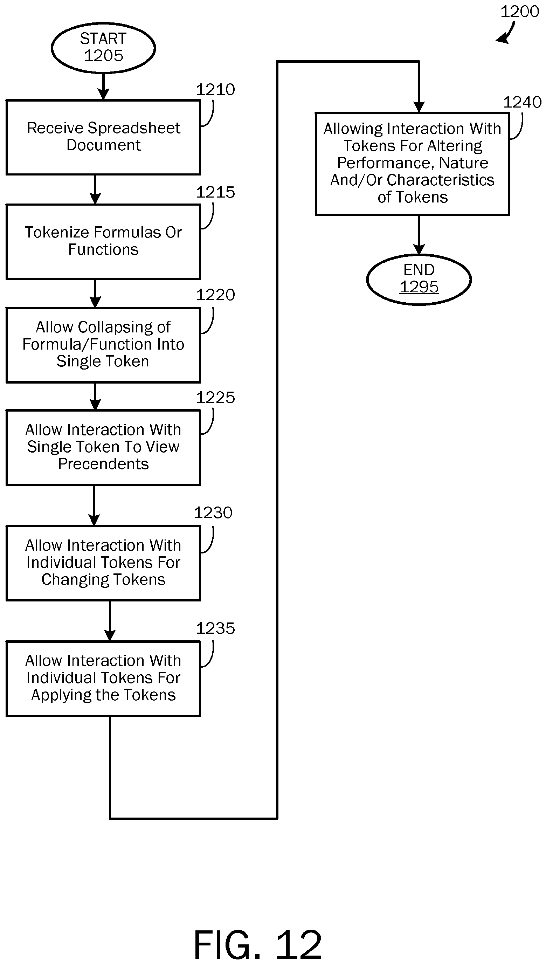

As stated above, a number of program modules and data files may be stored in the system memory 1304. While executing on the processing unit 1302, the program modules 1306 may perform processes including, but not limited to, one or more of the stages of the method 1200 illustrated in Figure 12. Other program modules that may be used in accordance with embodiments of the present invention may include applications, such as, notes applications, Internet browser applications, electronic mail and contacts applications, word processing applications, spreadsheet applications, database applications, slide presentation applications, drawing or computer-aided application programs, etc.

Furthermore, embodiments of the invention may be practiced in an electrical circuit comprising discrete electronic elements, packaged or integrated electronic chips containing logic gates, a circuit utilizing a microprocessor, or on a single chip containing electronic elements or microprocessors. For example, embodiments of the invention may be practiced via a system-on-a-chip (SOC) where each or many of the components illustrated in Fig. 13 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to use of web page content may be operated via application-specific logic integrated with other components of the computing device 1300 on the single integrated circuit (chip). Embodiments of the invention may also be practiced using other technologies capable of performing logical operations such as, for example, AND, OR, and NOT, including but not limited to mechanical, optical, fluidic, and quantum technologies. In addition, embodiments of the invention may be practiced within a general purpose computer or in any other circuits or systems.

The computing device 1300 may also have one or more input device(s) 1312 such as a keyboard, a mouse, a pen, a sound input device, a touch input device, etc. The output device(s) 1314 such as a display, speakers, a printer, etc. may also be included. The aforementioned devices are examples and others may be used. The computing device 1300 may include one or more communication connections 1316 allowing communications with other computing devices 1318. Examples of suitable communication connections 1316 include, but are not limited to, RF transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 1304, the removable storage device 1309, and the non-removable storage device 1310 are all computer storage media examples (i.e., memory storage.) Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 1300. Any such computer storage media may be part of the computing device 1300.

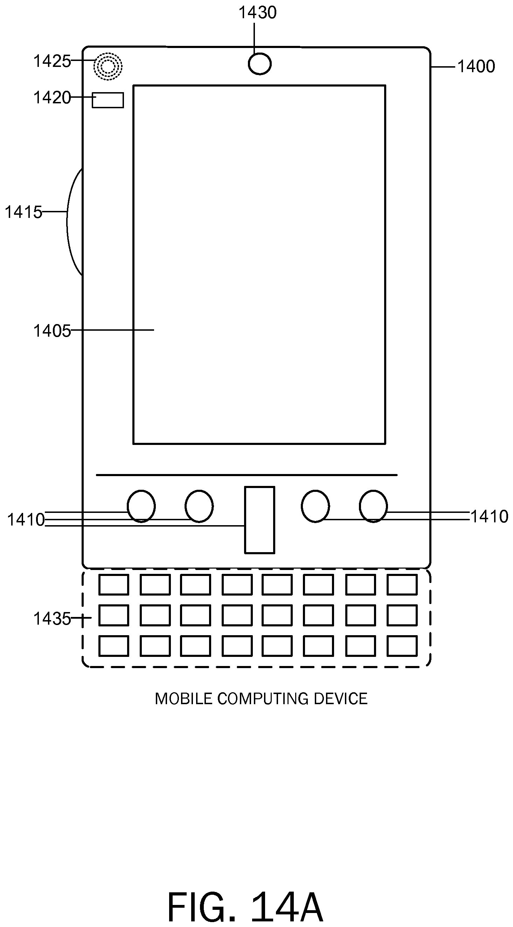

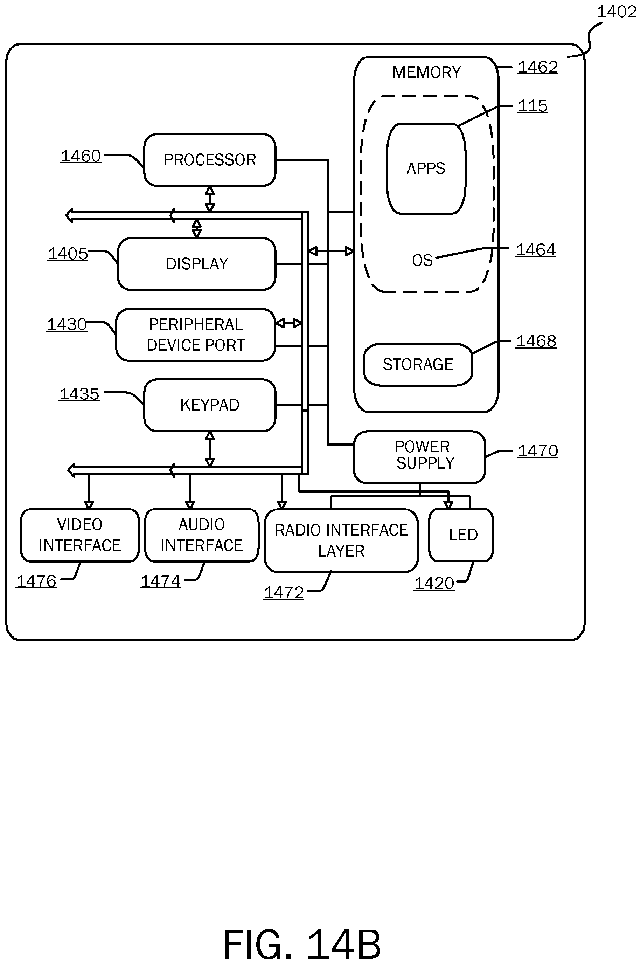

Figs. 14A and 14B illustrate a mobile computing device 1400, for example, a mobile telephone, a smart phone 110, a tablet-style personal computer 105, a laptop computer, and the like, with which embodiments of the invention may be practiced. With reference to Fig. 14A, one example of the present invention of a mobile computing device 1400 for implementing the examples of the present invention is illustrated. In a basic configuration, the mobile computing device 1400 is a handheld computer having both input elements and output elements. The mobile computing device 1400 typically includes a display 1405 and one or more input buttons 1410 that allow the user to enter information into the mobile computing device 1400. The display 1405 of the mobile computing device 1400 may also function as an input device (e.g., a touch screen display). If included, an optional side input element 1415 allows further user input. The side input element 1415 may be a rotary switch, a button, or any other type of manual input element. In alternative examples of the present invention, mobile computing device 1400 may incorporate more or less input elements. For example, the display 1405 may not be a touch screen in some examples of the present invention. In yet another alternative example of the present invention, the mobile computing device 1400 is a portable phone system, such as a cellular phone. The mobile computing device 1400 may also include an optional keypad 1435. Optional keypad 1435 may be a physical keypad or a "soft" keypad generated on the touch screen display. In various examples of the present invention, the output elements include the display 1405 for showing a graphical user interface (GUI), a visual indicator 1420 (e.g., a light emitting diode), and/or an audio transducer 1425 (e.g., a speaker). In some examples of the present invention, the mobile computing device 1400 incorporates a vibration transducer for providing the user with tactile feedback. In yet another example of the present invention, the mobile computing device 1400 incorporates input and/or output ports, such as an audio input (e.g., a microphone jack), an audio output (e.g., a headphone jack), and a video output (e.g., a HDMI port) for sending signals to or receiving signals from an external device.

Fig. 14B is a block diagram illustrating the architecture of one example of the present invention of a mobile computing device. That is, the mobile computing device 1400 can incorporate a system (i.e., an architecture) 1402 to implement some examples of the present invention In one example of the present invention, the system 1402 is implemented as a "smart phone" capable of running one or more applications (e.g., browser, e-mail, calendaring, contact managers, messaging clients, games, and media clients/players). In some examples of the present invention, the system 1402 is integrated as a computing device, such as an integrated personal digital assistant (PDA) and wireless phone.

One or more application programs may be loaded into the memory 1462 and run on or in association with the operating system 1464. Examples of the application programs include phone dialer applications, e-mail applications, personal information management (PIM) applications, word processing applications, spreadsheet applications, Internet browser applications, notes applications, messaging applications, and so forth. The system 1402 also includes a non-volatile storage area 1468 within the memory 1462. The non-volatile storage area 1468 may be used to store persistent information that should not be lost if the system 1402 is powered down. The application programs may use and store information in the non-volatile storage area 1468, such as e-mail or other messages used by an e-mail application, and the like. A synchronization application (not shown) also resides on the system 1402 and is programmed to interact with a corresponding synchronization application resident on a host computer to keep the information stored in the non-volatile storage area 1468 synchronized with corresponding information stored at the host computer. As should be appreciated, other applications may be loaded into the memory 1462 and run on the mobile computing device 1400.

The system 1402 has a power supply 1470, which may be implemented as one or more batteries. The power supply 1470 might further include an external power source, such as an AC adapter or a powered docking cradle that supplements or recharges the batteries.

The system 1402 may also include a radio 1472 that performs the function of transmitting and receiving radio frequency communications. The radio 1472 facilitates wireless connectivity between the system 1402 and the "outside world," via a communications carrier or service provider. Transmissions to and from the radio 1472 are conducted under control of the operating system 1464. In other words, communications received by the radio 1472 may be disseminated to the application programs 115 via the operating system 1464, and vice versa.

The visual indicator 1420 may be used to provide visual notifications and/or an audio interface 1474 may be used for producing audible notifications via the audio transducer 1425. In the illustrated example of the present invention, the visual indicator 1420 is a light emitting diode (LED) and the audio transducer 1425 is a speaker. These devices may be directly coupled to the power supply 1470 so that when activated, they remain on for a duration dictated by the notification mechanism even though the processor 1460 and other components might shut down for conserving battery power. The LED may be programmed to remain on indefinitely until the user takes action to indicate the powered-on status of the device. The audio interface 1474 is used to provide audible signals to and receive audible signals from the user. For example, in addition to being coupled to the audio transducer 1425, the audio interface 1474 may also be coupled to a microphone to receive audible input, such as to facilitate a telephone conversation. In accordance with examples of the present invention, the microphone may also serve as an audio sensor to facilitate control of notifications, as will be described below. The system 1402 may further include a video interface 1476 that enables an operation of an on-board camera 1430 to record still images, video stream, and the like.

A mobile computing device 1400 implementing the system 1402 may have additional features or functionality. For example, the mobile computing device 1400 may also include additional data storage devices (removable and/or non-removable) such as, magnetic disks, optical disks, or tape. Such additional storage is illustrated in Fig. 14B by the non-volatile storage area 1468.

Data/information generated or captured by the mobile computing device 1400 and stored via the system 1402 may be stored locally on the mobile computing device 1400, as described above, or the data may be stored on any number of storage media that may be accessed by the device via the radio 1472 or via a wired connection between the mobile computing device 1400 and a separate computing device associated with the mobile computing device 1400, for example, a server computer in a distributed computing network, such as the Internet. As should be appreciated such data/information may be accessed via the mobile computing device 1400 via the radio 1472 or via a distributed computing network. Similarly, such data/information may be readily transferred between computing devices for storage and use according to well-known data/information transfer and storage means, including electronic mail and collaborative data/information sharing systems.

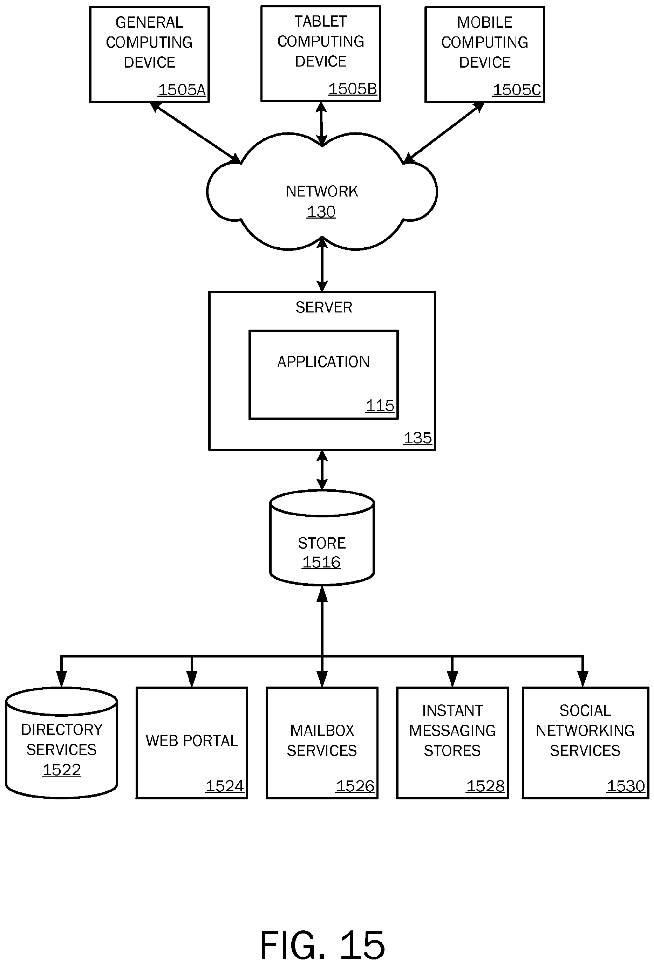

Fig. 15 illustrates one example of the present invention of the architecture of a system for providing interaction with spreadsheet application function tokens, as described above. Content developed, interacted with, or edited in association with embodiments of the invention may be stored in different communication channels or other storage types. For example, various documents and stored content items may be stored using a directory service 1522, a web portal 1524, a mailbox service 1526, an instant messaging store 1528, or a social networking site 1530. The interaction with spreadsheet application function tokens described herein may use any of these types of systems or the like for enabling data utilization, as described herein. A server 135 may provide output of the interaction with spreadsheet application function tokens to clients. As one example, the server 135 may be a web server providing the interaction with spreadsheet application function tokens over the web. The server 135 may provide the output of the interaction with spreadsheet application function tokens over the web to clients through a network 130. By way of example, the client computing device may be implemented and embodied in a personal computer 1300, a tablet computing device 105 and/or a mobile computing device (e.g., a smart phone) 110, or other computing device. Any of these examples of the present invention of the client computing device 1300, 105, 110, 120, 125, 135 may obtain content from the store 1516.

Embodiments of the present invention, for example, are described above with reference to block diagrams and/or operational illustrations of methods, systems, and computer program products according to embodiments of the invention. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more embodiments provided in this application are not intended to limit or restrict the scope of the invention as claimed in any way. The embodiments, examples, and details provided in this application are considered sufficient to convey possession and enable others to make and use the best mode of claimed invention. The claimed invention should not be construed as being limited to any embodiment, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate embodiments falling within the scope of the claimed invention.

## Claims

1. A method of interacting with spreadsheet functions, comprising:
receiving (1210) an electronic spreadsheet document;
displaying a spreadsheet function bar in association with the electronic spreadsheet document; and
displaying in the spreadsheet function bar a spreadsheet function, the spreadsheet function comprising one or more spreadsheet function components,
**characterized in that** the method further comprises:
identifying (1215) each of the one or more spreadsheet function components as a spreadsheet function token and allowing moving each spreadsheet function token within the spreadsheet function bar or outside of the spreadsheet function bar independently of each of the other spreadsheet function components comprised in the spreadsheet function, with a single drag-and-drop movement.

2. The method of claim 1, further comprising, in response to receiving a selection of a spreadsheet function token, providing an alternate spreadsheet function token for allowing modification of the spreadsheet function token and modification of operation of a spreadsheet function containing the spreadsheet function token.

3. The method of claim 1, further comprising, combining two or more of the spreadsheet function tokens into a single spreadsheet function token.

4. The method of claim 1, further comprising moving one or more of the spreadsheet function tokens from the spreadsheet function bar into the electronic spreadsheet document for operating the moved one or more of the spreadsheet function tokens on a content item in the electronic spreadsheet document onto which the moved one or more of the spreadsheet function tokens are deposited.

5. The method of claim 1, in response to receiving an interaction with a spreadsheet function token, toggling a cell reference associated with the interacted-with spreadsheet function token between an absolute reference and a relative reference.

6. The method of claim 1, in response to receiving an interaction with a spreadsheet function token, providing in the spreadsheet function bar a showing of one or more spreadsheet function components comprising the interacted-with spreadsheet function token.

7. The method of claim 1, wherein
in response to receiving an interaction with a spreadsheet function token, providing a textual representation of the interacted-with spreadsheet function token;
receiving a modification to the textual representation of the interacted-with spreadsheet function token; and
modifying the interacted-with spreadsheet function token according to the revision to the textual representation of the interacted-with spreadsheet function token.

8. A computer readable medium on which is stored computer executable instructions which when executed by a computer perform a method of interacting with spreadsheet functions, comprising:
receiving an electronic spreadsheet document;
displaying a spreadsheet function bar in association with the electronic spreadsheet document; and
displaying in the spreadsheet function bar a spreadsheet function, the spreadsheet function comprising one or more spreadsheet function components,
**characterized in that** the method further comprises:
identifying each of the one or more spreadsheet function components as a spreadsheet function token and allowing moving each spreadsheet function token within the spreadsheet function or outside of the spreadsheet function bar independently of each of the other spreadsheet function components comprised in the spreadsheet function, with a single drag-and-drop movement.

9. The computer-readable medium of claim 8, wherein the method further comprises:
in response to receiving a touch-enabled selection of a spreadsheet function component, providing a selectable alternate spreadsheet function component for replacing the selected spreadsheet function component for modifying operation of the spreadsheet function.

10. A system for interacting with spreadsheet functions, comprising:
one or more processors; and
a memory coupled to the one or more processors, the one or more processors operable to:
receive an electronic spreadsheet document;
display a spreadsheet function bar in association with the electronic spreadsheet document; and
display in the spreadsheet function bar a spreadsheet function, the spreadsheet function comprising one or more spreadsheet function components,
**characterized in that** the one or more processors are further operable to:
identify each of the one or more spreadsheet function components as a spreadsheet function token and allow moving each spreadsheet function token within the spreadsheet function or outside of the spreadsheet function bar independently of each of the other spreadsheet function components comprised in the spreadsheet function, with a single drag-and-drop movement.

11. The system of claim 10, wherein the one or more processors are further operable to:
combine two or more of the independently interactive spreadsheet function tokens into a single spreadsheet function token.

12. The system of claim 10, the one or more processors being further operable to move one or more of the independently interactive spreadsheet function tokens or the single spreadsheet function token from the spreadsheet function bar into the electronic spreadsheet document for operating the moved one or more of the independently interactive spreadsheet function tokens or the single spreadsheet function token on a content item in the electronic spreadsheet document.

## Patentansprüche

1. Verfahren zum Interagieren mit Tabellenkalkulationsfunktionen, mit:
Empfangen (1210) eines elektronischen Tabellenkalkulationsdokuments;
Anzeigen eines Tabellenkalkulationsfunktionsbalkens in Verbindung mit dem elektrischen Tabellenkalkulationsdokument; und
Anzeigen einer Tabellenkalkulationsfunktion in dem Tabellenkalkulationsfunktionsbalken, wobei die Tabellenkalkulationsfunktion eine oder mehrere Tabellenkalkulationsfunktionskomponenten umfasst,
**dadurch gekennzeichnet, dass** das Verfahren ferner umfasst:
Identifizieren (1215) jeder der einen oder mehreren Tabellenkalkulationsfunktionskomponenten als ein Tabellenkalkulationsfunktionssymbol und Zulassen, dass jedes Tabellenkalkulationsfunktionssymbol innerhalb des Tabellenkalkulationsfunktionsbalkens oder außerhalb des Tabellenkalkulationsfunktionsbalkens unabhängig von jeder der anderen Tabellenkalkulationsfunktionskomponenten, die in der Tabellenkalkulationsfunktion enthalten sind, mit einer einzigen Zieh-und-Ablegen-Bewegung bewegbar ist.

2. Verfahren nach Anspruch 1, das ferner umfasst: in Reaktion auf den Empfang einer Auswahl eines Tabellenkalkulationsfunktionssymbols, Bereitstellen eines alternativen Tabellenkalkulationsfunktionssymbols zum Zulassen einer Modifizierung des Tabellenkalkulationsfunktionssymbols und zur Modifizierung einer Aktivierung der Tabellenkalkulationsfunktion, die das Tabellenkalkulationsfunktionssymbol enthält.

3. Verfahren nach Anspruch 1, das ferner umfasst: Kombinieren zweier oder mehrerer der Tabellenkalkulationsfunktionssymbols zu einem einzigen Tabellenkalkulationsfunktionssymbol.

4. Verfahren nach Anspruch 1, das ferner umfasst: Verschieben eines oder mehrerer der Tabellenkalkulationsfunktionssymbole aus dem Tabellenkalkulationsfunktionsbalken in das elektronische Tabellenkalkulationsdokument zum Betätigen der verschobenen einen oder mehreren Tabellenkalkulationsfunktionssymbole auf einem Inhaltselement in dem elektronischen Tabellenkalkulationsdokument, auf welchem die verschobenen einen oder mehreren Tabellenkalkulationsfunktionssymbole angeordnet sind.

5. Verfahren nach Anspruch 1, wobei in Reaktion auf den Empfang einer Interaktion mit einem Tabellenkalkulationsfunktionssymbol, eine Zellenreferenz, die dem Tabellenkalkulationsfunktionssymbol, mit welchem interagiert wird, zugeordnet ist, zwischen einer absoluten Referenz und einer relativen Referenz umgeschaltet wird.

6. Verfahren nach Anspruch 1, das ferner umfasst: in Reaktion auf den Empfang einer Interaktion mit einem Tabellenkalkulationsfunktionssymbol, Bereitstellen eines Anzeigens einer oder mehrerer Tabellenkalkulationsfunktionskomponenten in dem Tabellenkalkulationsfunktionsbalken, in denen das Tabellenkalkulationsfunktionssymbol, mit welchem interagiert wird, enthalten ist.

7. Verfahren nach Anspruch 1, wobei
in Reaktion auf den Empfang einer Interaktion mit einem Tabellenkalkulationsfunktionssymbol eine textliche Darstellung des Tabellenkalkulationsfunktionssymbols, mit welchem interagiert wird, bereitgestellt wird;
eine Modifizierung an der textlichen Darstellung des Tabellenkalkulationsfunktionssymbols, mit welchem interagiert wird, empfangen wird; und
das Tabellenkalkulationsfunktionssymbol, mit welchem interagiert wird, gemäß der Änderung an der textlichen Darstellung des Tabellenkalkulationsfunktionssymbols, mit welchem interagiert wird, modifiziert wird.

8. Computerlesbares Medium, auf welchem computerausführbare Befehle gespeichert sind, die bei Ausführung durch einen Computer ein Verfahren zum Interagieren mit Tabellenkalkulationsfunktionen ausführen, mit:
Empfangen eines elektronischen Tabellenkalkulationsdokuments;
Anzeigen eines Tabellenkalkulationsfunktionsbalkens in Verbindung mit dem elektronischen Tabellenkalkulationsdokument; und
Anzeigen einer Tabellenkalkulationsfunktion in dem Tabellenkalkulationsfunktionsbalken, wobei die Tabellenkalkulationsfunktion eine oder mehrere Tabellenkalkulationsfunktionskomponenten umfasst,
**dadurch gekennzeichnet, dass** das Verfahren ferner umfasst:
Identifizieren jeder der einen oder mehreren Tabellenkalkulationsfunktionskomponenten als ein Tabellenkalkulationsfunktionssymbol und Zulassen einer Verschiebung jedes Tabellenkalkulationsfunktionssymbols innerhalb des Tabellenkalkulationsfunktionsbalkens oder außerhalb des Tabellenkalkulationsfunktionsbalkens unabhängig von jeder der anderen Tabellenkalkulationsfunktionskomponenten, die in der Tabellenkalkulationsfunktion umfasst sind, mittels einer einzigen Zieh-und-Ablegen-Bewegung.

9. Computerlesbares Medium nach Anspruch 8, wobei das Verfahren ferner umfasst:
in Reaktion auf das Empfangen einer durch Berührung ausgelösten Auswahl einer Tabellenkalkulationsfunktionskomponente, Bereitstellen einer auswählbaren alternativen Tabellenkalkulationsfunktionskomponente zum Ersetzen der ausgewählten Tabellenkalkulationsfunktionskomponente zum Modifizieren des Aktivierens der Tabellenkalkulationsfunktion.

10. System zum Interagieren mit Tabellenkalkulationsfunktionen, mit:
einem oder mehreren Prozessoren; und
einem mit dem einen oder den mehreren Prozessoren verbundenen Speicher, wobei der eine oder die mehreren Prozessoren ausgebildet sind zum:
Empfangen eines elektronischen Tabellenkalkulationsdokuments;
Anzeigen eines Tabellenkalkulationsfunktionsbalkens in Verbindung mit dem elektronischen Tabellenkalkulationsdokument; und
Anzeigen einer Tabellenkalkulationsfunktion in dem Tabellenkalkulationsfunktionsbalken, wobei die Tabellenkalkulationsfunktion eine oder mehrere Tabellenkalkulationsfunktionskomponenten umfasst,
**dadurch gekennzeichnet, dass** das Verfahren ferner umfasst:
Identifizieren jeder der einen oder mehreren Tabellenkalkulationsfunktionskomponenten als ein Tabellenkalkulationsfunktionssymbol und Zulassen einer Verschiebung jedes Tabellenkalkulationsfunktionssymbols innerhalb des Tabellenkalkulationsfunktionsbalkens oder außerhalb des Tabellenkalkulationsfunktionsbalkens unabhängig von jeder der anderen Tabellenkalkulationsfunktionskomponenten, die in der Tabellenkalkulationsfunktion umfasst sind, mittels einer einzigen Zieh-und-Ablegen-Bewegung.

11. System nach Anspruch 10, wobei der eine oder die mehreren Prozessoren ferner ausgebildet sind zum:
Kombinieren zweier oder mehrerer der unabhängig interaktiven Tabellenkalkulationsfunktionssymbole zu einem einzigen Tabellenkalkulationsfunktionssymbol.

12. System nach Anspruch 10, wobei der eine oder die mehreren Prozessoren ferner ausgebildet sind, eines oder mehrere der unabhängig interaktiven Tabellenkalkulationsfunktionssymbole oder das einzige Tabellenkalkulationsfunktionssymbol aus dem Tabellenkalkulationsfunktionsbalken in das elektronische Tabellenkalkulationsdokument zu verschieben, um die verschobenen einen oder mehreren der unabhängig interaktiven Tabellenkalkulationsfunktionssymbole oder das einzige Tabellenkalkulationsfunktionssymbol auf einem Inhaltselement in dem elektronischen Tabellenkalkulationsdokument zu aktivieren.

## Revendications

1. Procédé permettant d'interagir avec des fonctions de feuille de calcul, comprenant :
la réception (1210) d'un document de feuille de calcul électronique,
l'affichage d'une barre de fonctions de feuille de calcul en association avec le document de feuille de calcul électronique, et
l'affichage d'une fonction de feuille de calcul dans la barre de fonctions de feuille de calcul, la fonction de feuille de calcul comprenant une ou plusieurs composantes de fonction de feuille de calcul,
**caractérisé en ce que** le procédé comprend en outre :
l'identification (1215) de chacune de la ou des composantes de fonction de feuille de calcul sous la forme d'un jeton de fonction de feuille de calcul, ainsi que l'autorisation du déplacement de chaque jeton de fonction de feuille de calcul dans la barre de fonctions de feuille de calcul ou bien à l'extérieur de la barre de fonctions de feuille de calcul indépendamment de chacune des autres composantes de fonction de feuille de calcul comprise dans la fonction de feuille de calcul, grâce à un seul mouvement de glisser déposer.

2. Procédé selon la revendication 1, comprenant en outre, en réponse à la réception de la sélection d'un jeton de fonction de feuille de calcul, l'utilisation d'un jeton alternatif de fonction de feuille de calcul afin de permettre une modification du jeton de fonction de feuille de calcul et une modification de fonctionnement d'une fonction de feuille de calcul contenant le jeton de fonction de feuille de calcul.

3. Procédé selon la revendication 1, comprenant en outre la combinaison de deux jetons de fonction de feuille de calcul ou plus en un seul jeton de fonction de feuille de calcul.

4. Procédé selon la revendication 1, comprenant en outre le déplacement d'un seul ou de plusieurs des jetons de fonction de feuille de calcul depuis la barre de fonctions de feuille de calcul dans le document de feuille de calcul électronique afin d'exploiter le ou les jetons déplacés parmi les jetons de fonction de feuille de calcul sur un élément de contenu dans le document de feuille de calcul électronique sur lequel sont déposés le ou les jetons déplacés parmi les jetons de fonction de feuille de calcul.

5. Procédé selon la revendication 1, où, en réponse à la réception d'une interaction avec un jeton de fonction de feuille de calcul, il y a basculement entre référence absolue et référence relative d'une référence de cellule associée au jeton de fonction de feuille de calcul avec lequel il y a eu interaction.

6. Procédé selon la revendication 1, où, en réponse à la réception d'une interaction avec un jeton de fonction de feuille de calcul, il y a utilisation dans la barre de fonctions de feuille de calcul de l'affichage d'une ou plusieurs composantes de fonction de feuille de calcul comprenant le jeton de fonction de feuille de calcul avec lequel il y a eu interaction.

7. Procédé selon la revendication 1, dans lequel :
en réponse à la réception d'une interaction avec un jeton de fonction de feuille de calcul, il y a utilisation d'une représentation textuelle du jeton de fonction de feuille de calcul avec lequel il y a eu interaction,
il y a la réception d'une modification à la représentation textuelle du jeton de fonction de feuille de calcul avec lequel il y a eu interaction, et
il y a la modification du jeton de fonction de feuille de calcul avec lequel il y a eu interaction en fonction de la révision pratiquée sur la représentation textuelle du jeton de fonction de feuille de calcul avec lequel il y a eu interaction.

8. Support pouvant être lu par ordinateur sur lequel sont stockées des instructions exécutables par ordinateur, qui, lorsqu'elles sont exécutées par un ordinateur, réalisent un procédé permettant d'interagir avec des fonctions de feuille de calcul, comprenant :
la réception d'un document de feuille de calcul électronique,
l'affichage d'une barre de fonctions de feuille de calcul en association avec le document de feuille de calcul électronique, et
l'affichage d'une fonction de feuille de calcul dans la barre de fonctions de feuille de calcul, la fonction de feuille de calcul comprenant une ou plusieurs composantes de fonction de feuille de calcul,
**caractérisé en ce que** le procédé comprend en outre :
l'identification de chacune de la ou des composantes de fonction de feuille de calcul sous la forme d'un jeton de fonction de feuille de calcul, ainsi que l'autorisation du déplacement de chaque jeton de fonction de feuille de calcul dans la barre de fonctions de feuille de calcul ou bien à l'extérieur de la barre de fonctions de feuille de calcul indépendamment de chacune des autres composantes de fonction de feuille de calcul comprise dans la fonction de feuille de calcul, grâce à un seul mouvement de glisser déposer.

9. Support pouvant être lu par ordinateur selon la revendication 8, dans lequel le procédé comprend en outre :
en réponse à la réception d'une sélection validée par toucher d'une composante de fonction de feuille de calcul, l'utilisation d'une composante de fonction de feuille de calcul alternative sélectionnable afin de remplacer la composante de fonction de feuille de calcul sélectionnée dans le but de modifier le fonctionnement de la fonction de feuille de calcul.

10. Système permettant d'interagir avec des fonctions de feuille de calcul, comprenant :
un ou plusieurs processeurs, et
une mémoire couplée à ce ou à ces processeurs, le ou les processeurs pouvant être mis en oeuvre pour :
recevoir un document de feuille de calcul électronique,
afficher une barre de fonctions de feuille de calcul en association avec le document de feuille de calcul électronique, et
afficher une fonction de feuille de calcul dans la barre de fonctions de feuille de calcul, la fonction de feuille de calcul comprenant une ou plusieurs composantes de fonction de feuille de calcul,
**caractérisé en ce que** le ou les processeurs peuvent en outre être mis en oeuvre pour :
identifier chacune de la ou des composantes de fonction de feuille de calcul sous la forme d'un jeton de fonction de feuille de calcul et ainsi autoriser le déplacement de chaque jeton de fonction de feuille de calcul dans la barre de fonctions de feuille de calcul ou bien à l'extérieur de la barre de fonctions de feuille de calcul indépendamment de chacune des autres composantes de fonction de feuille de calcul comprise dans la fonction de feuille de calcul, grâce à un seul mouvement de glisser déposer.

11. Système selon la revendication 10, dans lequel le ou les processeurs peuvent en outre être mis en oeuvre pour :
combiner deux ou plus des jetons de fonction de feuille de calcul indépendamment interactifs en un seul jeton de fonction de feuille de calcul.

12. Système selon la revendication 10, dans lequel le ou les processeurs peuvent en outre être mis en oeuvre pour déplacer un ou plusieurs des jetons de fonction de feuille de calcul indépendamment interactifs ou bien le jeton unique de fonction de feuille de calcul depuis la barre de fonctions de feuille de calcul dans le document de feuille de calcul électronique afin d'exploiter le ou les jetons déplacés parmi les jetons de fonction de feuille de calcul ou bien le jeton unique de fonction de feuille de calcul sur un élément de contenu dans le document de feuille de calcul électronique.
